(19) Europäisches Patentamt
European Patent Office
Office européen des brevets

(11) EP 2 664 591 A1

(12) **EUROPEAN PATENT APPLICATION**
published in accordance with Art. 153(4) EPC

(43) Date of publication:
**20.11.2013 Bulletin 2013/47**

(21) Application number: **12733997.6**

(22) Date of filing: **11.01.2012**

(51) Int Cl.:
***C03B 33/09*** *(2006.01)* ***B23K 26/00*** *(2006.01)*
***B23K 26/14*** *(2006.01)* ***B23K 26/38*** *(2006.01)*

(86) International application number:
**PCT/JP2012/050334**

(87) International publication number:
**WO 2012/096284 (19.07.2012 Gazette 2012/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.01.2011 JP 2011003496**
**31.08.2011 JP 2011190024**

(71) Applicant: **Asahi Glass Company, Limited**
**Tokyo 100-8405 (JP)**

(72) Inventors:
- **SAITO, Isao**
  **Tokyo 100-8405 (JP)**
- **KOIKE, Akio**
  **Tokyo 100-8405 (JP)**
- **IWANAGA, Yasunari**
  **Tokyo 100-8405 (JP)**
- **KOBAYASHI, Yusuke**
  **Tokyo 100-8405 (JP)**
- **IWASAKI, Tatsuya**
  **Tokyo 100-8405 (JP)**

(74) Representative: **Müller-Boré & Partner**
**Patentanwälte**
**Grafinger Straße 2**
**81671 München (DE)**

# (54) CUTTING METHOD FOR STRENGTHENED GLASS PLATE

(57) A method of cutting a strengthened glass plate includes irradiating a laser beam 20 on a front surface 12 of a strengthened glass plate 10 and moving an irradiation area 22 of the laser beam 20 on the front surface 12 of the strengthened glass plate 10. The laser beam has a wavelength from 800 to 1100 nm and 70.00% to 99.8% of the laser beam 20 injected into the front surface 12 of the strengthened glass plate 10 is transmitted. Further, the strengthened glass plate 10 is cut by heating an intermediate layer 17 at the irradiation area 22 at a temperature less than or equal to an annealing point while moving the irradiation area 22 of the laser beam 20 at a speed greater than or equal to 1.0 mm / sec so that a crack that penetrates the strengthened glass plate 10 in the thickness direction follows the irradiation area 22.

FIG.1A

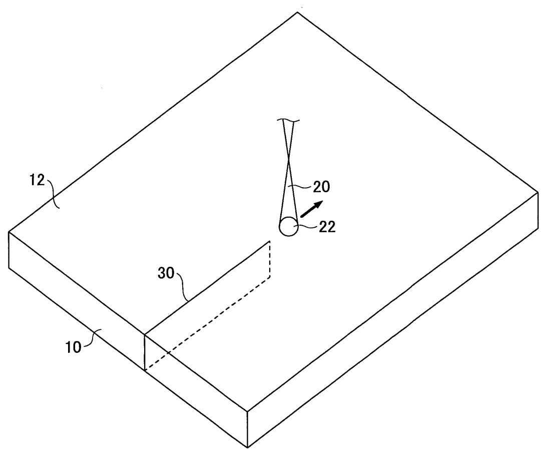




Printed by Jouve, 75001 PARIS (FR)

## Description

### BACKGROUND OF THE INVENTION

1. Field of the Invention

The present invention relates to a method of cutting a strengthened glass plate.

2. Description of the Related Art

Recently, in mobile devices such as mobile phones, PDAs or the like, a cover glass (protection glass) is often used in order to protect displays (including touch panels) and increase good appearances. Further, glass substrates are widely used as substrates for displays.

Meanwhile, mobile devices are becoming thinner and lighter so that a glass used for the mobile devices is also becoming thinner. When a glass becomes thinner, its strength is lower. Thus, a strengthened glass including a front surface layer and a back surface layer in which compression stresses remain, respectively, has been developed in order to increase the strength of a glass. The strengthened glass is also used for a vehicle window glass or a structural window glass.

The strengthened glass is manufactured by, for example, a thermally strengthening method, a chemical strengthening method or the like. In the thermally strengthening method, a glass at a temperature near its softening point is quenched from a front surface and a back surface so that a temperature difference between the front surface and the back surface and the inside of the glass is generated to form the front surface layer and the back surface layer in which compression stresses remain, respectively. On the other hand, in the chemical strengthening method, a front surface and a back surface of a glass are ion-exchanged to substitute ions (Li ions, Na ions, for example) each having a smaller ionic radius in the glass with ions (K ion, for example) each having a larger ionic radius to form the front surface layer and the back surface layer in which compression stresses remain, respectively. In both methods, an intermediate layer in which tensile stress remains is formed between the front surface layer and the back surface layer as a counteraction.

When manufacturing a strengthened glass, it is more efficient to perform a strengthening process on a glass having a size larger than a product size and cut the glass into a plurality of pieces, compared with a case when the strengthening process is performed for each glass having the product size.

Thus, a method of cutting a strengthened glass plate is proposed in which a laser beam is irradiated on a front surface of a strengthened glass plate and an irradiation area of the laser beam is moved on the front surface of the strengthened glass plate (see Patent Document 1, for example).

[Patent Document]

[Patent Document 1] Japanese Laid-open Patent Publication No. 2008-247732

Here, in the above described Patent Document 1, as a carbon dioxide gas laser is used as a light source of the laser beam, most of the laser beam is absorbed as heat near the front surface of the strengthened glass plate. Thus, a tensile stress larger than the remaining tensile stress is generated at a place right under the irradiation area of the laser beam in a glass front surface. As a result, a crack which is formed when cutting may exceed the irradiation area of the laser beam and drastically propagate in an unintended direction. This deteriorates accuracy in tracking of the cutting line, in other words, the cutting line is shifted from a desired proposed line to be cut, or the glass is broken without being cut. This tendency becomes significant as the remaining tensile stress increases.

### SUMMARY OF THE INVENTION

The present invention is made in light of the above problems, and provides a method of cutting a strengthened glass plate in which accuracy in tracking of a cutting line is improved.

According to an embodiment, there is provided a method of cutting a strengthened glass plate in which a strengthened glass plate is cut by irradiating a laser beam on a front surface of the strengthened glass plate and moving an irradiation area of the laser beam along a proposed line to be cut on the front surface, the strengthened glass plate including, a front surface layer and a back surface layer in each of which a compression stress remains, respectively, and an intermediate layer formed between the front surface layer and the back surface layer, in which a tensile stress remains. The method includes cutting the strengthened glass plate by heating the intermediate layer at the irradiation area of the laser beam at a temperature less than or equal to an annealing point while transmitting 70.0% to 99.8% of the laser beam having a wavelength between 800 to 1100 nm injected into the front surface and moving the irradiation area of the laser beam at a speed greater than or equal to 1.0 mm /sec, so that a crack, which penetrates the strengthened glass plate in a thickness direction of the strengthened glass plate, follows the irradiation area.

According to the embodiment, a method of cutting a strengthened glass plate by which accuracy in tracking of a cutting line is improved is provided.

## BRIEF DESCRIPTION OF THE DRAWINGS

Fig. 1A is a view for explaining a method of cutting a strengthened glass plate of a first embodiment (1);
Fig. 1B is a view for explaining a method of cutting a strengthened glass plate of the first embodiment (2);
Fig. 2A is a schematic view illustrating an example of distribution of remaining stress in a chemically strengthened glass plate before irradiating a laser beam;
Fig. 2B is a schematic view illustrating an example of distribution of remaining stress in an thermally strengthened glass plate before irradiating a laser beam;
Fig. 3 is a cross-sectional view illustrating an example of a strengthened glass plate before irradiating a laser beam;
Fig. 4 is a view for explaining an example of circularity of an irradiation area of the laser beam;
Fig. 5 is a schematic view illustrating an example of a collection position of the laser beam;
Fig. 6 is a schematic view illustrating an example of an optical axis of the laser beam;
Fig. 7 is a schematic view illustrating an example of distribution of stress along an A-A line in Fig. 1B;
Fig. 8 is a schematic view illustrating an example of distribution of stress along a B-B line in Fig. 1B;
Fig. 9 is a view for explaining a method of cutting a strengthened glass plate of a second embodiment;
Fig. 10A is a view for explaining a method of cutting a strengthened glass plate of a third embodiment (1);
Fig. 10B is a view for explaining a method of cutting a strengthened glass plate of the third embodiment (2);
Fig. 11A is a view for explaining a method of cutting a strengthened glass plate of a fourth embodiment (1);
Fig. 11B is a view for explaining a method of cutting a strengthened glass plate of the fourth embodiment (2);
Fig. 12 is a view for explaining a method of cutting a strengthened glass plate of a fifth embodiment; and
Fig. 13 is a view illustrating a proposed line to be cut at a front surface of a strengthened glass plate of example 7-1 to example 7-2.

## DETAILED DESCRIPTION OF THE PREFERRED EMBODIMENTS

The invention will be described herein with reference to illustrative embodiments.

(First embodiment)

Fig. 1A and Fig. 1B are views for explaining a method of cutting a strengthened glass plate of a first embodiment. Fig. 1B is a plan view of Fig. 1A. As shown in Fig. 1A and Fig. 1B, a strengthened glass plate 10 is cut by irradiating a laser beam 20 on a front surface (one of main surfaces) 12 of the strengthened glass plate 10 while moving an irradiation area 22 of the laser beam 20 on the front surface 12 of the strengthened glass plate 10 to apply stress on the strengthened glass plate 10.

The strengthened glass plate 10 is manufactured by a thermally strengthening (or strengthening) method, a chemical strengthening (or strengthening) method or the like, for example. The kind of the strengthened glass is selected in accordance with its usage. For example, a soda lime glass is used as the strengthened glass for a vehicle window glass, a structural window glass, a glass substrate for PDP or a cover glass. Further, a non-alkali glass that does not substantially include alkali metal is used as the strengthened glass for a glass substrate for an LCD.

In the thermally strengthening method, a glass at a temperature near its softening point is quenched from a front surface and a back surface (both of main surfaces) so that a temperature difference between the front surface and the back surface (both of main surfaces) and the inside of the glass is generated to form the front surface layer and the back surface layer in which compression stresses remain, respectively. The thermally strengthening method is adaptable for strengthening a thick glass.

In the chemical strengthening method, a front surface and a back surface (both of main surfaces) of a glass are ion-exchanged to substitute ions (Li ions, Na ions, for example) each having a smaller ionic radius in the glass with ions (K ions, for example) each having a larger ionic radius to form the front surface layer and the back surface layer in which compression stresses remain, respectively. The chemical strengthening method is adaptable for strengthening a soda lime glass including alkali metal.

In the thermally strengthening method and the chemical strengthening method, an intermediate layer in which tensile stress is remained is formed between the front surface layer and the back surface layer as a counteraction of the formation of the front surface layer and the back surface layer in which compression stresses remain, respectively.

Fig. 2A is a schematic view illustrating an example of distribution of a remaining stress in a chemically strengthened glass plate before irradiating a laser beam. Fig. 2B is a schematic view illustrating an example of a remaining stress in an thermally strengthened glass plate before irradiating a laser beam. Fig. 3 is a cross-sectional view illustrating an example of a strengthened glass plate before irradiating a laser beam. In Fig. 3, a direction of an arrow indicates an operation direction of stress, and the length of the arrow indicates the magnitude of the stress.

As shown in Fig. 3, the strengthened glass plate 10 includes a front surface layer 13 and a back surface layer 15, in which compression stresses remain, respectively, and an intermediate layer 17, in which a tensile stress remains, provided between the front surface layer 13 and the back surface layer 15. A surface layer of an end surface of the strengthened glass plate 10 may be composed only by a layer in which the compression stress remains, or may be composed by a layer in which the compression stress remains and a layer in which the tensile stress remains.

As shown in Fig. 2A and Fig. 2B, the compression stresses (>0) remaining in the front surface layer 13 and the back surface layer 15 tend to gradually become smaller toward the inside from the front surface 12 and the back surface 14 of the strengthened glass plate 10, respectively. For the chemically strengthened glass plate, as shown in Fig. 2A, the tensile stress (>0) that remains in the intermediate layer 17 is almost constant. Further, for the thermally strengthened glass plate, as shown in Fig. 2B, the tensile stress (>0) that remains in the intermediate layer 17 becomes gradually smaller from the inside of the glass toward the front surface 12 and the back surface 14 of the glass, respectively.

In Fig. 2A and Fig. 2B, "CS" indicates the maximum remaining compression stress (front surface compression stress) (>0) in the front surface layer 13 or the back surface layer 15, "CT" indicates the internal remaining tensile stress (the average value of the remaining tensile stress of the intermediate layer 17) (>0) in the intermediate layer 17, "CM" (see Fig. 2B) indicates the maximum remaining tensile stress in the intermediate layer 17 and "DOL" indicates the thickness of the front surface layer 13 or the back surface layer 15. "CS", "CT", "CM" and "DOL" are adjustable by a strengthening process condition. For example, for the thermally strengthening method, "CS", "CT", "CM" and "DOL" are adjustable by a cooling speed or the like of the glass. Further, for the chemical strengthening method, "CS", "CT", "CM" and "DOL" are adjustable by concentration or temperature of process solution, soaking period in the process solution or the like as the glass is soaked in the process solution (for example, $KNO_3$ fused-salt) to perform ion-exchange. Here, although the front surface layer 13 and the back surface layer 15 of the embodiment have the same thickness and the same maximum remaining compression stress, they may have different thicknesses or different maximum remaining compression stresses.

The front surface 12 of the strengthened glass plate 10 is not previously provided with scribe lines (groove lines) along proposed lines to be cut. The scribe lines may be previously formed, however, in such a case, the number of processes increases and operations become more complicated. Further, if the scribe lines are previously formed, the glass may be chipped.

The strengthened glass plate 10 is previously provided with an initial crack at an end portion corresponding to a cut starting position. The initial crack may be formed by a general method such as using a cutter, a file or a laser. The initial crack may not be formed in order to reduce the number of process steps. In particular, when the end portion of the strengthened glass plate 10 is previously grinded by a rotating grinder or the like before cutting, the initial crack may not be formed because a micro crack is formed when grinding the strengthened glass plate 10.

The irradiation area 22 of the laser beam 20 (the center of the irradiation area 22 of the laser beam 20, for example) is moved on a straight line or a curved line along a proposed line to be cut from the end portion of the strengthened glass plate 10 toward the inside on the front surface 12 of the strengthened glass plate 10. With this configuration, a crack 30 (see Fig. 1A and Fig. 1B) is formed from the end portion to the inside of the strengthened glass plate 10 and the strengthened glass plate 10 is cut. The irradiation area 22 of the laser beam 20 may be moved on a P-shaped line. In this case, a terminal end of the proposed line to be cut included in a moving path crosses the proposed line to be cut in the middle.

A support member that supports the strengthened glass plate 10 may be moved or rotated or a light source of the laser beam 20 may be moved in order to move the irradiation area 22 of the laser beam 20 on the front surface 12 of the strengthened glass plate 10. Further, a mirror that is provided in the middle of a pathway of the laser beam 20 may be rotated.

As shown in Fig. 1A and Fig. 1B, for example, the irradiation area 22 of the laser beam 20 has a circular shape on the front surface 12 of the strengthened glass plate 10. However, the shape of the irradiation area 22 of the laser beam 20 is not particularly limited and alternatively, the irradiation area 22 of the laser beam 20 may have a rectangular shape, an elliptical shape or the like. Here, the circularity of the irradiation area 22 may be less than or equal to 0.5R. When the circularity is less than or equal to 0.5R, required accuracy in rotational control of the irradiation area 22 becomes lower when the center of the irradiation area 22 is moved along the proposed line to be cut having a curved shape on the front surface 12 of the strengthened glass plate 10. Further, when the accuracy in rotational control of the irradiation area 22 is almost the same, the cutting accuracy becomes higher as the variation in width of the irradiation area 22 in a direction of a normal line of the proposed line to be cut. For example, even when the radius of curvature of the proposed line to be cut is small, the glass can be accurately cut. More preferably, the circularity is less than or equal to 0.3R.

Further more preferably, the circularity is less than or equal to 0.2R. Here, as shown in Fig. 4, the circularity is a difference between radiuses "R" and "r" of two concentric circles, which are a circumscribed circle C11 and an inscribed circle C12 of the irradiation area 22. Here, "R" indicates the radius of the circumscribed circle C11 of the irradiation area 22 and "r" indicates the radius of the inscribed circle C12 of the irradiation area 22.

The irradiation area 22 of the laser beam 20 is moved on the front surface 12 of the strengthened glass plate 10 at a speed in accordance with the thickness of the strengthened glass plate 10, the maximum remaining compression stress (CS), the internal remaining tensile stress (CT), the thickness of the front surface layer 13 or the back surface layer 15 (DOL), the power of the light source of the laser beam 20 or the like.

The light source of the laser beam 20 is not specifically limited but may be, for example, an UV laser (wavelength: 355 nm), a green laser (wavelength: 532 nm), a diode laser (wavelength: 808 nm, 940 nm, 975 nm), a fiber-laser (wavelength: 1060 to 1100 nm), a YAG laser (wavelength: 1064 nm, 2080 nm, 2940 nm), a laser using a mid-infrared light parametric amplifier (wavelength: 2600 to 3450 nm) or the like. The oscillating method of the laser beam 20 is not limited and both a CW laser which continuously oscillates the laser beam and a pulse laser which intermittently oscillates the laser beam may be used. Further, the intensity distribution of the laser beam 20 is not limited and may be a Gaussian shape or a top hat shape.

The laser beam 20 irradiated from the light source is condensed by a condenser lens or the like and imaged onto the front surface 12 of the strengthened glass plate 10.

A collection position of the laser beam 20 may be at a laser beam source side or a back surface 14 side when the front surface 12 of the strengthened glass plate 10 is taken as a reference. Further, as shown in Fig. 5, the collection position of the laser beam 20 may be within the strengthened glass plate 10, specifically within the intermediate layer 17 as long as a condensing area does not become too high of a heating temperature, in other words, can be kept less than or equal to the annealing point.

When the collection position of the laser beam 20 is within the intermediate layer 17, an area in which stress is generated by the laser beam 20 can be minimized so that cutting accuracy can be increased and the power of the light source of the laser beam 20 can be reduced as well.

As will be explained later in detail, the laser beam 20 is absorbed as heat while passing through the strengthened glass plate 10 and the intensity is lowered.

When the collection position of the laser beam 20 is in the back surface 14 or in the vicinity of the back surface 14 (an interface between the back surface layer 15 and the intermediate layer 17, for example), the difference between the heating temperature of the front surface 12 and the heating temperature of the back surface 14 becomes smaller as the intensity of the laser beam 20 per unit area (power density) in the back surface 14 becomes higher. Thus, the heating efficiency becomes better and the power of the light source of the laser beam 20 is reduced.

An optical axis 21 of the laser beam 20 may be perpendicular to the front surface 12 as shown in Fig. 1A and Fig. 5, for example (although the optical axis is not shown in Fig. 1A) or may be oblique to the front surface 12 as shown in Fig. 6, at the front surface 12 of the strengthened glass plate 10. When there is a possibility that the laser beam 20 that is reflected by the front surface 12 influences a laser oscillator, if the optical axis 21 of the laser beam 20 is oblique to the front surface 12, almost all of the reflected light does not return back to the laser oscillator and the influence can be reduced. Further, when a film 18 that has a property to absorb the laser beam 20 is formed at the front surface 12 of the strengthened glass plate 10, the strengthened glass plate 10 cannot be cut as the laser beam 20 is absorbed by the film 18 and the front surface 12 is heated. However, as shown in Fig. 6, when the optical axis 21 of the laser beam 20 is oblique to the front surface 12, the glass can be cut even when the proposed line to be cut overlaps an edge of the film 18. For the film 18, for example, a ceramic film or a resin film may be used for improving the design and a transparent electrode film or the like may be used to improve the function.

According to the conventional method, the glass is cut only by the function of the laser beam. Thus, in a strengthened glass whose remaining tensile stress is strong, a crack generated by the remaining tensile stress of the intermediate layer drastically propagates in an unintended direction so that the glass cannot be cut into a desired shape.

On the other hand, according to the embodiment, the strengthened glass plate 10 is cut not only by the function of the laser beam 20 but also by using a propagation of a crack by the remaining tensile stress from the intermediate layer 17 when the strengthened glass plate 10 and the laser beam 20 satisfy an equation explained later. It means that, although the explanation is described later in detail, a propagation of the crack 30 generated in the strengthened glass plate 10 by the remaining tensile stress of the intermediate layer 17 is controlled by heating the intermediate layer 17 at the irradiation area 22 of the laser beam 20 at a temperature less than or equal to an annealing point by the above condition, so that the strengthened glass plate 10 can be cut by the crack 30 by the remaining tensile stress. Here, the reason to heat the intermediate layer 17 at the temperature less than or equal to the annealing point is that, if the intermediate layer 17 is heated at a temperature higher than the annealing point, the glass becomes a higher temperature even within a short time in which the laser beam passes and a viscosity flow tends to be easily generated. Then, the compression stress generated by the laser beam is moderated by the viscosity flow.

Thus, in this embodiment, it is configured such that the strengthened glass plate 10 does not absorb too much of the laser beam by setting the moving speed of the irradiation area of the laser beam 20 as fast as possible. Specifically, the moving speed of the irradiation area 22 of the laser beam 20 is set to be greater than or equal to 1.0 mm /sec to have 70.00% to 99.8% of the laser beam 20 injected into the front surface layer of the strengthened glass plate 10 transmitted. Here, the amount of the laser beam 20 injected into the front surface 12 of the strengthened glass plate 10 is less than the amount of the laser beam 20 output from the light source for an amount reflected or diffused by the front surface 12 of the strengthened glass plate 10. Here, the transmittance of the laser beam 20 with respect to the strengthened glass plate 10 can be measured by a method of measuring defined by JIS R3106 and is normalized after removing the reflected light. It means that, among the laser beam 20 output from the light source, a ratio of the transmitted light with respect to a total of the absorbed light absorbed by the strengthened glass plate 10 and the transmitted light transmitted the strengthened glass plate 10 is defined as a transmittance.

The moving speed of the irradiation area 22 of the laser beam 20 may be different or the same in accordance with cutting positions of the strengthened glass plate 10. For example, when cutting the strengthened glass plate 10 into a rectangular shape, the strengthened glass plate 10 will have edge portions and corner portions of the rectangular. Thus, the irradiation area 22 may be moved at a lower speed at the corner portions and moved at a higher speed at the edge portions. Even when the irradiation area 22 is moved at the lower speed, the speed is greater than or equal to 1.0 mm / sec. The rectangular shape here is not necessarily a strict rectangular and may include a convex portion or a concave portion at a part of the rectangular, or the corner portion may have a predetermined curved shape.

The laser beam 20 which passes the strengthened glass plate 10 satisfies an equation $I = I_0 \times \exp(-\alpha \times L)$, where the intensity of the laser beam 20 at the front surface 12 of the strengthened glass plate 10 is $I_0$ and the intensity of the laser beam 20 when being moved in strengthened glass plate 10 for a distance L (cm) is I. This equation is a so-called Lambert-Beer law. Here, "$\alpha$" expresses an absorption coefficient ($cm^{-1}$) of the strengthened glass plate 10 with respect to the laser beam 20.

When the laser beam 20 is perpendicularly injected into the front surface 12 of the strengthened glass plate 10, the laser beam 20 moves a distance that is the same as the thickness t (cm) of the strengthened glass plate 10 and is ejected from the back surface 14. At this time, the laser beam 20 can reach the inside without being absorbed at the front surface of the strengthened glass plate 10 when the strengthened glass plate 10 and the laser beam 20 satisfy an equation $0 < \alpha \times t \leq 3.0$. Then, the inside of the strengthened glass plate 10 is sufficiently heated and the stress generated in the strengthened glass plate 10 is changed from a status shown in Fig. 3 to a status shown in Fig. 7 or Fig. 8.

Fig. 7 is a schematic view illustrating an example of distribution of stress along an A-A line in Fig. 1B, and is a schematic view illustrating an example of the distribution of the stress in a cross-section including the irradiation area of the laser beam. Fig. 8 is a schematic view illustrating an example of distribution stress along a B-B line in Fig. 1B, and is a schematic view illustrating an example of the distribution of the stress at a cross-section at a back side of the cross-section shown in Fig. 7. Here, the "back side" means a back side of the scanning direction of the laser beam 20. In Fig. 7 and Fig. 8, a direction of an arrow indicates an operation direction of stress, and the length of the arrow indicates the magnitude of the stress.

As the intensity of the laser beam 20 is sufficiently high in the intermediate layer 17 at the irradiation area 22 of the laser beam 20, the temperature becomes higher compared with the circumference. Thus, the tensile stress smaller than the remaining tensile stress shown in Fig. 2A, Fig. 2B and Fig. 3, or the compression stress is generated. At a part where the tensile stress smaller than the remaining tensile stress or the compression stress is generated, the propagation of the crack 30 is suppressed. In order to surely prevent the propagation of the crack 30, as shown in Fig. 7, it is preferable that the compression stress is generated.

Here, as the compression stress larger than the remaining compression stress shown in Fig. 2A, Fig. 2B and Fig. 3 is generated in the front surface layer 13 or the back surface layer 15 at the irradiation area 22 of the laser beam 20, the propagation of the crack 30 is suppressed.

By a balance between the compression stress shown in Fig. 7, the tensile stress is generated in the intermediate layer 17 in the cross-section at the back side of the cross-section shown in Fig. 7 as shown in Fig. 8. The tensile stress is larger than the remaining tensile stress and a crack 30 is generated at a portion at which the tensile stress reaches a predetermined value. The crack 30 is formed to penetrate the front surface 12 to the back surface 14 of the strengthened glass plate 10. In this embodiment, the cut is a so-called "full cut".

When the irradiation area 22 of the laser beam 20 is moved under this state, as the stress distribution in the position of the irradiation area 22 is as shown in Fig. 7 in the strengthened glass plate 10, the crack 30 is not automatically formed shifting from the proposed line to be cut and a front end position of the crack 30 moves to follow the position of the irradiation area 22. Thus, the propagation of the crack 30 can be controlled by the laser beam 20.

Thus, according to the embodiment, by setting $\alpha \times t$ to be greater than 0 and less than or equal to 3.0, the propagation of the crack 30 can be controlled by the laser beam 20 in the strengthened glass plate 10. Then, as the crack 30 propagates right after the irradiation area 22, the cutting line is generated exactly the same as the moving trail of the irradiation area 22 and the cutting accuracy can be improved. Here, a front end of the crack 30 may not follow right after the irradiation area 22 but may follow the irradiation area 22 in an overlapped manner. The cutting accuracy can be improved as the front end of the crack 30 is closer to the irradiation area 22 or the front end of the crack 30 overlaps the irradiation area 22.

In accordance with its usage, it is required for a glass to have a high transparency. In such a case, when the used laser wavelength is close to the wavelength area of visible light, it is better that $\alpha \times t$ is closer to 0. However, when $\alpha \times t$ is too small, absorbed efficiency becomes worse. Thus, preferably, $\alpha \times t$ is greater than or equal to 0.0005 (the laser beam absorption ratio is greater than or equal to 0.05%), more preferably, greater than or equal to 0.002 (the laser beam absorption ratio is greater than or equal to 0.2%), and further more preferably, greater than or equal to 0.004 (the laser beam absorption ratio is greater than or equal to 0.4%).

On the other hand, in accordance with its usage, it is required for a glass to have a low transparency. In such a case, when the used laser wavelength is close to the wavelength area of visible light, it is better that $\alpha \times t$ becomes larger. However, when $\alpha \times t$ is too large, the amount of the laser beam absorbed at the front surface becomes larger so that the propagation of the crack cannot be controlled. Thus, preferably, $\alpha \times t$ is less than or equal to 3.0 (the laser beam absorption ratio is less than or equal to 95%), more preferably, less than or equal to 0.105 (the laser beam absorption ratio is less than or equal to 10%), and further more preferably, less than or equal to 0.02 (the laser beam absorption ratio is less than or equal to 2%).

Here, according to the discovery by the present inventors, when the internal remaining tensile stress (CT) of the intermediate layer 17 becomes greater than or equal to 30 MPa, the crack formed in the strengthened glass plate 10 automatically propagates (automatically formed) only by the remaining tensile stress of the intermediate layer 17.

Thus, the remaining tensile stress of the intermediate layer 17 may be greater than or equal to 15 MPa so that the internal remaining tensile stress (CT) dominants the tensile stress generated by the laser beam 20 among the tensile stress used for cutting the glass. With this configuration, the distance between a position at which the tensile stress reaches the predetermined value (in other words, a position of the front end of the crack 30) and the position of the laser beam 20 becomes sufficiently short in the strengthened glass plate 10 so that the cutting accuracy is improved.

The internal remaining tensile stress (CT) of the intermediate layer 17 may be greater than or equal to 30 MPa and more preferably, greater than or equal to 40 MPa. When the internal remaining tensile stress (CT) is greater than or equal to 30 MPa, the remaining tensile stress of the intermediate layer 17 is only the tensile stress that is used for cutting the glass so that the accuracy in tracking of the cutting line can be further improved.

When cutting the chemically strengthened glass of the embodiment, the upper limited value of the internal remaining tensile stress (CT) is 120 MPa. By the current technique, the glass can be strengthened as high as about 120 MPa due to a technical reason in a strengthening process. However, if a chemically strengthened glass whose internal remaining tensile stress (CT) exceeds 120 MPa can be manufactured, the present invention can be applied to such a chemically strengthened glass.

The absorption coefficient ($\alpha$) is defined by the wavelength of the laser beam 20, the glass composition of the strengthened glass plate 10 or the like. For example, as the contents of iron oxide (including FeO, $Fe_2O_3$ or $Fe_3O_4$), the contents of cobalt oxide (including CoO, $Co_2O_3$ or $Co_3O_4$), or the contents of copper oxide (including CuO or $Cu_2O$) in the strengthened glass plate 10 increase, the absorption coefficient ($\alpha$) in a near infrared wavelength area near 1000 nm becomes greater. Further, as the contents of oxide of rare earth element (Yb, for example) in the strengthened glass plate 10 become greater, the absorption coefficient ($\alpha$) near an absorbed wavelength of the rare earth becomes greater.

The absorption coefficient ($\alpha$) in a near infrared wavelength area near 1000 nm is set in accordance with its usage. For example, for a vehicle window glass, the absorption coefficient ($\alpha$) may be less than or equal to 3 $cm^{-1}$. Further, for a structural window glass, the absorption coefficient ($\alpha$) may be less than or equal to 0.6 $cm^{-1}$. Further, for a display glass, the absorption coefficient ($\alpha$) may be less than or equal to 0.2 $cm^{-1}$.

The wavelength of the laser beam 20 may be 250 to 5000 nm. By setting the wavelength of the laser beam 20 to 250 to 5000 nm, both of the transmittance of the laser beam 20 and the heating efficiency of the laser beam 20 are compatible. The wavelength of the laser beam 20 is preferably 300 to 4000 nm, and is more preferably 800 to 3000 nm.

The contents of iron oxide in the strengthened glass plate 10 are, for example, 0.02 to 1.0 mass % although that depend on the kind of the glass that constitute the strengthened glass plate 10. The value of $\alpha \times t$ is adjustable to a desired range by adjusting the contents of iron oxide within this range using a generalized near infrared laser near 1000 nm. Instead of adjusting the contents of iron oxide, the contents of the oxide of cobalt oxide, copper oxide or a rare earth element may be adjusted.

The thickness (t) of the strengthened glass plate 10 is determined in accordance with its usage.

When the strengthened glass plate 10 is the chemically strengthened glass, the thickness (t) of the strengthened glass plate 10 may be 0.01 to 0.2 cm. The internal remaining tensile stress (CT) can be sufficiently increased by setting the thickness (t) to less than or equal to 0.2 cm. On the other hand, when the thickness (t) is less than 0.01 cm, it is difficult to perform a chemical strengthening process on the glass. More preferably, the thickness (t) may be 0.03 to 0.15 cm, and further more preferably 0.05 to 0.15 cm.

When the strengthened glass plate 10 is the thermally strengthened glass, the thickness (t) of the strengthened glass plate 10 may be 0.1 to 3 cm. The internal remaining tensile stress (CT) can be sufficiently increased by setting the thickness (t) to less than or equal to 3 cm. On the other hand, when the thickness (t) becomes less than 0.1 cm, it is difficult to apply a thermally strengthening process on the glass. The thickness (t) is preferably 0.15 to 2 cm, and more preferably 0.2 to 1.5 cm.

When the irradiation area 22 of the laser beam 20 has a circular shape, the irradiation area 22 of the laser beam 20 may have a diameter ($\Phi$) greater than 0.18 mm and less than the thickness of the strengthened glass plate 10 at the front surface (a surface into which the laser beam 20 is injected) 12 of the strengthened glass plate 10. When the diameter ($\Phi$) becomes greater than or equal to the thickness of the strengthened glass plate 10, the irradiation area 22 of the laser beam 20 and the heated area become too large so that a part of the cut surface (in particular, a cut starting portion or a cut terminal portion) may be slightly curved. The diameter ($\Phi$) may be less than 1.03 mm. Further, the diameter ($\Phi$) may be less than or equal to 0.5 mm so that the cutting accuracy is improved as the positional controllability of the crack 30 is increased. On the other hand, when the diameter ($\Phi$) is less than or equal to 0.18 mm, the power density becomes too high when a variation in power control of the laser beam 20 is generated so that the cut surface becomes rough and there may be a case that a fine fissure is formed. However, for example, if the value of $\alpha \times t$ is as small as less than or equal to 0.105 (the laser beam absorption ratio is less than or equal to 10%), even when the power density becomes high due to the variation in the power control, the influence is hardly applied. Thus, even when the diameter ($\Phi$) is less than or equal to 0.18 mm, there is a case when the cutting accuracy is improved. Further, when the power control accuracy of the laser beam 20 is high, regardless of the value of $\alpha \times t$, the cutting accuracy may be improved even when the diameter ($\Phi$) is less than or equal to 0.18 mm.

(Second embodiment)

Fig. 9 is a view for explaining a method of cutting a strengthened glass plate of a second embodiment. In Fig. 9, the same components are given the same reference numerals as those in Fig. 1A and explanations are not repeated.

In this embodiment, similar to the first embodiment, the strengthened glass plate 10 is cut by irradiating the laser beam 20 on the front surface 12 of the strengthened glass plate 10 while moving the irradiation area 22 of the laser beam 20 on the front surface 12 of the strengthened glass plate 10.

Further, in this embodiment, the strengthened glass plate 10 is cut using a propagation of a crack by the remaining tensile stress of the intermediate layer 17 by having the strengthened glass plate 10 and the laser beam 20 satisfy an equation $0 < \alpha \times t \leq 3.0$, where the absorption coefficient of the strengthened glass plate 10 with respect to the laser beam 20 is $\alpha$ ($cm^{-1}$) and the thickness of the strengthened glass plate 10 is t (cm). It means that it is possible to control the propagation of the crack 30 generated in the strengthened glass plate 10 by the remaining tensile stress of the intermediate layer 17 by heating the intermediate layer 17 at a temperature less than or equal to the annealing point at the irradiation area 22 of the laser beam 20. Thus, in this embodiment as well, the same advantages as the first embodiment can be obtained.

In addition to this, in this embodiment, as shown in Fig. 9, a gas 40 is sprayed on the front surface 12 of the strengthened glass plate 10 and a spraying area 42 of the gas 40 is moved on the front surface 12 of the strengthened glass plate 10 in association with the irradiation area 22 of the laser beam 20 (with the irradiation area 22). The spraying area 42 may overlap the irradiation area 22 or be provided in the vicinity of the irradiation area 22. Further, the spraying area 42 may antecede the irradiation area 22 or may follow the irradiation area 22. For the gas 40, not specifically limited, compressed air or the like is used, for example.

Deposits (dust, for example) adhered to the front surface 12 of the strengthened glass plate 10 is sprayed by the compressed air to prevent adsorption of the laser beam 20 by the deposits. Thus, overheating of the front surface 12 of the strengthened glass plate 10 can be prevented.

The gas 40 may be a coolant gas that locally cools the strengthened glass plate 10. At this time, as shown in Fig. 9, the spraying area 42 of the gas 40 may follow the irradiation area 22 such that the spraying area 42 of the gas 40 is positioned in the vicinity of a back side in a moving direction of the irradiation area 22 of the laser beam 20. With this configuration, as a high temperature gradient is generated in the vicinity of the back side in the moving direction of the irradiation area 22 of the laser beam 20, the distance between a position at which the tensile stress reaches the predetermined value (in other words, a position of the front end of the crack 30) and a position of the laser beam 20 becomes shorter. Thus, the position of the crack 30 can be further controlled well and the cutting accuracy can be further improved.

(Third embodiment)

Fig. 10A and Fig. 10B are views for explaining a method of cutting a strengthened glass plate of a third embodiment. Fig. 10A is a cross-sectional view illustrating a cross-section of a strengthened glass plate, Fig. 10B is a plan view illustrating the front surface of the strengthened glass plate in an enlarged manner. In Fig. 10A, a direction of an arrow indicates a direction of a flow of gas. In Fig. 10A and Fig. 10B, the same components are given the same reference numerals as those in Fig. 1A, Fig. 9 or the like and explanations are not repeated.

There is a difference between the present embodiment and the second embodiment that the irradiation area 22 of the laser beam 20 is positioned inside the outer edge of the spraying area 42 in this embodiment, where the spraying area 42 of the gas 40 is provided in the vicinity of the back side of the irradiation area 22 of the laser beam 20 in the second embodiment. Other structures are the same as those of the second embodiment and the difference is mainly explained.

The gas 40 is a coolant gas that locally cools the strengthened glass plate 10. The irradiation area 22 of the laser beam 20 is provided at an inner side of an outer edge of the spraying area 42 of the gas 40.

The spraying area 42 of the gas 40 is an area on the front surface 12 of the strengthened glass plate 10 to which the exit 52 of the nozzle 50, which is an ejection port of the gas 40, is projected in a direction parallel to a center axis 51 of the nozzle 50.

As shown in Fig. 10B, as the irradiation area 22 of the laser beam 20 is provided at the inner side of the outer edge of the spraying area 42 on the front surface 12 of the strengthened glass plate 10, the heating area of the strengthened glass plate 10 can be contracted. Thus, as a high temperature gradient is generated in the vicinity of the back side of the irradiation area 22 of the laser beam 20, the distance between a position at which the tensile stress reaches the predetermined value (in other words, a position of the front end of the crack 30) and a position of the laser beam 20 becomes shorter. Thus, the position of the crack 30 can be further controlled and the cutting accuracy can be further improved.

The nozzle 50 is formed into a tubular shape, as shown in Fig. 10A, for example, and the laser beam 20 may pass inside the nozzle 50. The center axis 51 of the nozzle 50 and the optical axis 21 of the laser beam 20 may be coaxially positioned. This is effective for a case where the positional relationship is unnecessary to be changed as the positional relationship between the spraying area 42 of the gas 40 and the irradiation area 22 of the laser beam 20 is fixed.

(Fourth embodiment)

Fig. 11A and Fig. 11B are views for explaining a method of cutting a strengthened glass plate of a fourth embodiment. Fig. 11A is a cross-sectional view taken along an A-A line in Fig. 11B. Fig. 11B is a plan view of the strengthened glass plate. In Fig. 11A and Fig. 11B, the same components are given the same reference numerals as those in Fig. 1A or the like and explanations are not repeated.

In the first embodiment, the laser beam 20 is perpendicularly injected into the front surface 12 of the strengthened glass plate 10. Alternatively, in this embodiment, the laser beam 20 is obliquely injected into the front surface 12 of the strengthened glass plate 10. Other structures are the same as those of the second embodiment and the difference is mainly explained.

As shown in Fig. 11A, as the laser beam 20 is obliquely injected into the front surface 12 of the strengthened glass plate 10 when seen from a moving direction of the irradiation area 22 of the laser beam 20, the cut surface of the strengthened glass plate 10 becomes oblique with respect to the thickness direction. Thus, the strengthened glass plate 10 can be separated in the thickness direction by cut portions obtained by cutting the strengthened glass.

In accordance with Snell laws of refraction, the larger the angle-of-incidence $\beta$ of the optical axis 21 of the laser beam 20 becomes, the larger the angle of refraction $\gamma$ becomes. Thus, the inclination of the cut surface of the strengthened glass plate 10 with respect to the thickness direction becomes large. As this inclination becomes larger, it becomes easier for the strengthened glass plate 10 to be separated in the thickness direction after cutting, however, a chamfering process for the cut surface after cutting becomes difficult.

The angle-of-incidence $\beta$ is set in accordance with a positional relationship between the optical axis 21 of the laser beam 20 and the proposed line to be cut 11 of the front surface 12 of the strengthened glass plate 10. For example, as shown in Fig. 11B, when the optical axis 21 of the laser beam 20 is perpendicularly positioned with respect to the proposed line to be cut 11, the angle-of-incidence $\beta$ is set to be within a range of 1° to 60° when seen in a plan view (in the thickness direction). Here, the optical axis 21 of the laser beam 20 may be obliquely positioned with respect to the proposed line to be cut 11 when seen in a plan view (in the thickness direction).

When the laser beam 20 is obliquely injected into the front surface 12 of the strengthened glass plate 10, the laser beam 20 moves a distance $t / \cos\gamma$ and is ejected from the back surface 14. At this time, the laser beam 20 can reach the inside without being absorbed in the vicinity of the front surface 12 of the strengthened glass plate 10 when the strengthened glass plate 10 and the laser beam 20 satisfy an equation $0 < \alpha \times t / \cos\gamma \leq 3.0$. Thus, similar to the first embodiment, the propagation of the crack 30 generated in the strengthened glass plate 10 can be controlled by the remaining tensile stress of the intermediate layer 17. Thus, in this embodiment, the same advantages as the first embodiment can be obtained.

Here, in this embodiment, similar to the second and the third embodiments, the gas 40 may be sprayed on the front surface 12 of the strengthened glass plate 10 and the spraying area 42 of the gas 40 may be cooperatively moved with the irradiation area 22 of the laser beam 20 on the front surface 12 of the strengthened glass plate 10. The spraying area 42 of the gas 40 may overlap the irradiation area 22 of the laser beam 20, or may be provided in the vicinity of the irradiation area 22 of the laser beam 20. Further, the irradiation area 22 of the laser beam 20 may be provided at the inner side of the outer edge of the spraying area 42.

(Fifth embodiment)

Fig. 12 is a view for explaining a method of cutting a strengthened glass plate of a fifth embodiment. In Fig. 12, the same components are given the same reference numerals as those in Fig. 1A and explanations are not repeated.

In this embodiment, different from the first embodiment in which a single strengthened glass plate 10 is cut, a plurality of (three, for example) strengthened glass plates 10A to 10C in a stacked manner are cut at the same time. For example, when the value of $\alpha \times t$ is as small as less than or equal to 0.105 (the laser beam absorption ratio is less than or equal to 10%), almost all of the laser beam irradiated on the front surface of the strengthened glass plate 10 is transmitted so that it is possible to cut the plurality of strengthened glass plates 10 in the stacked manner at the same time. As the other structures are similar to those of the second embodiment, the difference is mainly explained.

In this embodiment, the laser beam 20 is irradiated on a front surface (one of main surfaces) 112 of a stacked body 110, which is composed by N (N is a natural number greater than or equal to 2) stacked strengthened glass plates 10A to 10C and the irradiation area 22 of the laser beam 20 is moved on each of the front surfaces 12A to 12C of the strengthened glass plates 10A to 10C, respectively, to cut the N strengthened glass plates 10A to 10C.

Although the N strengthened glass plates 10A to 10C may have different glass compositions from each other, preferably, the N strengthened glass plates 10A to 10C may have the same glass composition. Although the N strengthened glass plates 10A to 10C may have different thicknesses from each other, preferably, the N strengthened glass plates 10A to 10C may have the same thickness. Although the N strengthened glass plates 10A to 10C may have different coefficients of thermal expansion from each other, preferably, the N strengthened glass plates 10A to 10C may have the same coefficients of thermal expansion. Although the N strengthened glass plates 10A to 10C may have different absorption coefficients $\alpha$ from each other, preferably, the N strengthened glass plates 10A to 10C have the same absorption coefficient $\alpha$.

In the stacked body 110, the strengthened glass plates adjacent to each other (the strengthened glass plate 10A and the strengthened glass plate 10B, for example) may be in contact with each other or may be apart from each other. Further, in the stacked body 110, a spacer such as resin or the like may be provided between the strengthened glass plates adjacent to each other (the strengthened glass plate 10A and the strengthened glass plate 10B, for example).

The laser beam 20 may be perpendicularly injected into a front surface (an upper surface in Fig. 12) 112 of the stacked body 110. It means that the laser beam 20 may be perpendicularly injected into each of the front surfaces 12A to 12C the strengthened glass plates 10A to 10C, respectively.

Each of the strengthened glass plates 10A to 10C and the laser beam 20 satisfy an equation $0 < \alpha_i \times t_i \leq 3.0$ (where i is an arbitrary natural number greater than or equal to 1 and less than or equal to N), where the absorption coefficient of each of the strengthened glass plates 10 with respect to the laser beam 20 is $\alpha_i$ ($cm^{-1}$) and the thickness of each of the strengthened glass plates 10 is $t_i$ (cm).

When the laser beam 20 is perpendicularly injected into each of the front surfaces 12A to 12C of the strengthened glass plates 10A to 10C, respectively, the laser beam 20 moves a distance the same as the thickness $t_i$ (cm) of each of the strengthened glass plates 10A to 10C and is ejected from the back surface. At this time, the laser beam 20 can reach the inside without being absorbed in the vicinity of each of the front surfaces 12A to 12C of the strengthened glass plates 10A to 10C, respectively, when each of the strengthened glass plates 10A to 10C and the laser beam 20 satisfy an equation $0 < \alpha_i \times t_i \leq 3.0$. Thus, similar to the first embodiment, the propagation of the crack generated in each of the strengthened glass plates 10A to 10C can be controlled by the remaining tensile stress of the intermediate layer of each of the strengthened glass plates 10A to 10C. Thus, in this embodiment as well, the same advantage as the first embodiment can be obtained.

Here, in this embodiment, similar to the second and the third embodiments, the gas 40 may be sprayed on the front surface 112 of the stacked body 110 and the spraying area 42 of the gas 40 may be moved in association with the irradiation area 22 of the laser beam 20 on the front surface 112 of the stacked body 110. The spraying area 42 of the gas 40 may overlap the irradiation area 22 of the laser beam 20 or may be provided in the vicinity of the irradiation area 22 of the laser beam 20. Further, the irradiation area 22 of the laser beam 20 may be provided at the inner side of the outer edge of the spraying area 42.

Further, in this embodiment, although the laser beam 20 is perpendicularly injected into each of the front surfaces 12A to 12C of the strengthened glass plates 10A to 10C, respectively, similar to the fourth embodiment, the laser beam 20 may be obliquely injected into each of the front surfaces 12A to 12C of the strengthened glass plates 10A to 10C, respectively. At this time, each of the strengthened glass plates 10 and the laser beam 20 satisfy an equation $0 < \alpha_i \times t_i / \cos\gamma_i \leq 3.0$ (i is an arbitrary natural number greater than or equal to 1 and less than or equal to N), where the angle of refraction of the laser beam 20 at each of the front surfaces 12A to 12C of the strengthened glass plates 10A to 10C, respectively, is $\gamma_i$.

(Example)

Although the present invention is specifically explained in the following by examples or the like, the present invention is not limited by these examples or the like.

(Example 1-1 to example 1-4)

(Manufacturing of chemically strengthened glass plate)

A glass plate of 50 mm x50 mm with a predetermined thickness was manufactured as a glass plate for a chemical strengthening method by dissolving a glass material prepared by mixing a plurality of kinds of materials, shaping the dissolved molten glass into a plate shape to be gradually cooled to near room temperature, cutting, machining, and mirror finishing both surfaces.

The glass material was prepared by varying loadings of powders of iron oxide ($Fe_2O_3$) with respect to a base material having the same proportioning ratio so that the absorption coefficient ($\alpha$) of the glass plate with respect to the laser beam became a desired value.

The respective glass plate for a chemical strengthening method includes $SiO_2$: 60.7%, $Al_2O_3$: 9.6%, MgO: 7.0%, CaO: 0.1%, SrO: 0.1%, BaO: 0.1%, $Na_2O$: 11.6%, $K_2O$: 6.0% and $ZrO_2$: 4.8%, mass % as calculated as oxide, and a predetermined amount (a predetermined outer percentage) of iron oxide ($Fe_2O_3$).

The respective chemically strengthened glass plate was manufactured by soaking the respective glass plate for a chemical strengthening method in $KNO_3$ fused-salt to perform an ion-exchange and then cooling to near room temperature. The process conditions such as the temperature or soaking period of $KNO_3$ fused-salt or the like were set such that the internal remaining tensile stress (CT) became a desired value.

The internal remaining tensile stress (CT) of the respective chemically strengthened glass plate was obtained by measuring a front surface compression stress (CS) and a depth of a compression stress layer (DOL) using a front surface stress measuring device FSM-6000 (manufactured by Orihara Manufacturing Co., LTD.) and calculating using the following equation (I) based on the measured values and the thickness (t) of the chemically strengthened glass plate.

$$CT = (CS \times DOL) / (t - 2 \times DOL) \quad (I)$$

Here, as a result of measurement, the front surface layer and the back surface layer of each of the chemically strengthened glass plates had the same thickness and the same maximum compression stress.

In a case when the front surface layer and the back surface layer of the respective chemically strengthened glass plates have different thicknesses and different maximum compression stresses, the internal remaining tensile stress (CT) can be obtained using the following equation (II).

$$CT = (C1 \times D1 / 2 + C2 \times D2 / 2) / (t - D1 - D2) \quad (II)$$

In the above equation (II), "C1" indicates the maximum remaining compression stress of the front surface layer, "D1" indicates the thickness of the front surface layer, "C2" indicates the maximum remaining compression stress of the back surface layer and "D2" indicates the thickness of the back surface layer.

(Cutting of chemically strengthened glass plate)

The chemically strengthened glass plate was cut by a cutting method shown in Fig. 1A and Fig. 1B. An initial crack was previously formed at a cut starting position at a side surface of the respective chemically strengthened glass plate by a file but scribe lines were not formed at the front surface of the respective chemically strengthened glass plate.

The light source of the laser beam was a fiber-laser (center wavelength range: 1075 to 1095 nm). The absorption coefficient of each of the chemically strengthened glass plates with respect to the laser beam was measured by a UV-visible near-infrared spectrophotometer Lambda 950.

The optical axis of the laser beam was positioned to be perpendicular to each of the front surfaces of the chemically strengthened glass plates, respectively.

The irradiation area of the laser beam was moved at a constant speed of 10 mm /sec for 50 mm from one end (initial crack) to the other end of a proposed line to be cut on a front surface of each of the chemically strengthened glass plates. The proposed line to be cut, which is the center line of the moving path, was a straight line parallel to one of the edges of the rectangular shape chemically strengthened glass plate, where the distance from the edge was 10 mm. The irradiation area of the laser beam had a circular shape.

The collection position of the laser beam was provided at a position -10.3 to 20 mm from the front surface of each of the chemically strengthened glass plates (upper surface) (the upward direction is determined as positive where the upper surface is the standard (the light source side)). The collection angle of the laser beam was set to be 1.4 to 33.4°.

(Evaluation of cut result)

Cut results were evaluated by (1) whether being cut, (2) a quality of a cut end portion, (3) a quality of a cut surface and (4) the maximum shifted amount.

(1) For whether being cut, "○" was used when the chemically strengthened glass plate was cut by the proposed line to be cut, and "x" was used when the crack that is shifted from the proposed line to be cut was automatically formed or when the glass was broken without being cut, as the propagation of the crack cannot be controlled.

(2) For the quality of the cut end portion, a cut surface was observed by viewing and was evaluated whether an end portion of the cut surface (a cut starting portion and a cut terminal portion of the cut surface) was a flat surface or not. When the end portion of the cut surface was a flat surface, "○" was used, and when the end portion of the cut surface was a curved surface, "×" was used.

(3) For the quality of the cut surface, a cut surface was observed by viewing and was evaluated whether a fissure existed at the cut surface.

When the fissure could not be viewed, "○" was used and when the fissure could be recognized, "x" was used.

Here, even when the evaluations of (2) the quality of the cut end portion or (3) the quality of the cut surface are "x", as long as the cutting accuracy is good, the glass can be used depending on its usage.

(4) The maximum shifted amount expresses how the cutting line is shifted from the proposed line to be cut at the front surface of the chemically strengthened glass plate and was obtained by measuring a range in a direction perpendicular to the proposed line to be cut. The maximum shifted amount was measured except for a cut starting portion and a cut terminal portion.

The evaluated results are shown in Table 1 with cutting conditions and the like.

[Table 1]

| | | EXAMPLE 1-1 | EXAMPLE 1-2 | EXAMPLE 1-3 | EXAMPLE 1-4 |
|---|---|---|---|---|---|
| LASER BEAM | LIGHT SOURCE POWER (W) | 180 | 200 | 50 | 4 |
| | COLLECTION ANGLE (° ) | 1.4 | 1.4 | 1.4 | 33.4 |
| | COLLECTION POSITION (mm) | 12.4 | 12.4 | 12.4 | -0.8 |
| | $\phi$ (mm) | 0.3 | 0.3 | 0.3 | 0.5 |
| TEMPERED GLASS | CT(MPa) | 68.2 | 115 | 43.6 | 65.5 |
| | t(cm) | 0.05 | 0.05 | 0.14 | 0.07 |
| $\alpha$ (/cm) | | 0.09 | 0.09 | 0.48 | 38.3 |
| $\alpha$ (/cm) ×t(cm) | | 0.0045 | 0.0045 | 0.0672 | 2.68 |
| RATIO OF TRANSMITTED LIGHT (%) | | 99.55 | 99.55 | 93.50 | 6.86 |
| CUT OR NOT | | ○ | ○ | ○ | ○ |
| QUALITY OF CUT END PORTION | | ○ | ○ | ○ | ○ |

(continued)

| | EXAMPLE 1-1 | EXAMPLE 1-2 | EXAMPLE 1-3 | EXAMPLE 1-4 |
|---|---|---|---|---|
| QUALITY OF CUT SURFACE | ○ | ○ | ○ | ○ |
| MAXIMUM SHIFTED AMOUNT (mm) | 0 | 0 | 0 | 0 |

For each of Example 1-1 to Example 1-4 shown in Table 1, at any cases, evaluations of whether being cut, the quality of the cut end portion and the quality of the cut surface were all "○" and the maximum shifted amount was 0 mm.

(Example 1-5 to Example 1-10)

In Example 1-5 to Example 1-10 (comparative examples), different from Example 1-1 to Example 1-4 (examples), the chemically strengthened glass plate was attempted to be cut while the value of the thickness (t) × absorption coefficient (α) was set to be greater than 3.0.

In Example 1-5, a chemically strengthened glass plate was manufactured similarly to Example 1-4 except that the thickness (t) was changed. Then, the irradiation area of the laser beam was moved on the manufactured chemically strengthened glass plate.

In Example 1-6 to Example 1-10, a chemically strengthened glass plate was manufactured similarly to Example 1-2 except that a carbon dioxide gas laser (wavelength: 10600 nm) was used as the light source of the laser beam and the absorption coefficient (α) was changed (the thickness (t) was also changed for Example 1-6 to Example 1-8). Then, the irradiation area of the laser beam was moved on the manufactured chemically strengthened glass plate. The irradiation area of the laser beam at the front surface of the chemically strengthened glass plate was set to be an elliptical shape (length 12 mm, width 3 mm) longer in a moving direction in order to retain a heat transmission period by propagating the irradiation period of the laser beam.

The evaluated results are shown in Table 2 with cutting conditions and the like.

[Table 2]

| | | EXAMPLE 1-5 | EXAMPLE 1-6 | EXAMPLE 1-7 | EXAMPLE 1-8 | EXAMPLE 1-9 | EXAMPLE 1-10 |
|---|---|---|---|---|---|---|---|
| LASER BEAM | LIGHT SOURCE POWER (W) | 4 | 25 | 20 | 25 | 15 | 30 |
| | COLLECTION ANGLE (° ) | 33.4 | - | - | - | - | - |
| | COLLECTION POSITION (mm) | -0.8 | - | - | - | - | - |
| | ϕ (mm) | 0.5 | - | - | - | - | - |
| TEMPERED GLASS | CT(MPa) | 44 | 15.3 | 18.1 | 25.2 | 28.1 | 46.7 |
| | t(cm) | 0.1 | 0.09 | 0.09 | 0.09 | 0.05 | 0.05 |
| α (/cm) | | 38.3 | 1000 OR MORE | 1000 OR MORE | 1000 OR MORE | 1000 OR MORE | 1000 OR MORE |
| α (/cm)×t(cm) | | 3.83 | 90 OR MORE | 90 OR MORE | 90 OR MORE | 50 OR MORE | 50 OR MORE |
| RATIO OF TRANSMITTED LIGHT (%) | | 2.17 | 0.00 | 0.00 | 0.00 | 0.00 | 0.00 |
| CUT OR NOT | | × | ○ | ○ | × | ○ | × |
| QUALITY OF CUT END PORTION | | - | × | × | - | × | - |
| QUALITY OF CUT SURFACE | | - | ○ | ○ | - | ○ | - |

(continued)

| | EXAMPLE 1-5 | EXAMPLE 1-6 | EXAMPLE 1-7 | EXAMPLE 1-8 | EXAMPLE 1-9 | EXAMPLE 1-10 |
|---|---|---|---|---|---|---|
| MAXIMUM SHIFTED AMOUNT (mm) | - | 0.7 | 0.3 | - | 0.35 | - |

In Example 2-1 to Example 2-20 (examples), the internal remaining tensile stress (CT) was adjusted by changing chemically strengthening process conditions and the relationship between the internal remaining tensile stress (CT) and the maximum shifted amount was examined. Manufacturing of, cutting of and the evaluation of the evaluating chemically strengthened glass plate were performed similarly to Example 1-1 to Example 1-4. The evaluated results are shown in Table 3 to Table 5 with cutting conditions and the like.

[Table 3]

| | | EXAMPLE 2-1 | EXAMPLE 2-2 | EXAMPLE 2-3 | EXAMPLE 2-4 | EXAMPLE 2-5 | EXAMPLE 2-6 | EXAMPLE 2-7 |
|---|---|---|---|---|---|---|---|---|
| LASER BEAM | LIGHT SOURCE POWER (W) | 20 | 40 | 150 | 150 | 80 | 70 | 140 |
| | COLLECTION ANGLE (° ) | 5.7 | 11.4 | 1.4 | 1.4 | 1.4 | 1.4 | 1.4 |
| | COLLECTION POSITION (mm) | -4.8 | -3 | 20 | 12 | 20 | 12 | 20 |
| | Φ (mm) | 0.5 | 0.6 | 0.5 | 0.3 | 0.5 | 0.3 | 0.5 |
| TEMPERED GLASS | CT(MPa) | 21.4 | 21.4 | 27.8 | 27.8 | 27.9 | 27.9 | 36.3 |
| | t (cm) | 0.1 | 0.1 | 0.09 | 0.09 | 0.09 | 0.09 | 0.07 |
| $\alpha$ (/cm) | | 2.99 | 2.99 | 0.3 | 0.3 | 0.8 | 0.8 | 0.3 |
| $\alpha$ (/cm)×t(cm) | | 0.299 | 0.299 | 0.027 | 0.027 | 0.072 | 0.072 | 0.021 |
| RATIO OF TRANSMITTED LIGHT (%) | | 74.16 | 74.16 | 97.34 | 97.34 | 93.05 | 93.05 | 97.92 |
| CUT OR NOT | | ○ | ○ | ○ | ○ | ○ | ○ | ○ |
| QUALITY OF CUT END PORTION | | ○ | ○ | ○ | ○ | ○ | ○ | ○ |
| QUALITY OF CUT SURFACE | | ○ | ○ | ○ | ○ | ○ | ○ | ○ |
| MAXIMUM SHIFTED AMOUNT (mm) | | 0.2 | 0.1 | 0.1 | 0.15 | 0.15 | 0.2 | 0.15 |

[Table 4]

| | | EXAMPLE 2-8 | EXAMPLE 2-9 | EXAMPLE 2-10 | EXAMPLE 2-11 | EXAMPLE 2-12 | EXAMPLE 2-13 | EXAMPLE 2-14 |
|---|---|---|---|---|---|---|---|---|
| LASER BEAM | LIGHT SOURCE POWER (W) | 120 | 60 | 50 | 40 | 20 | 60 | 50 |
| | COLLECTION ANGLE (° ) | 1.4 | 1.4 | 1.4 | 1.4 | 1.4 | 1.4 | 1.4 |
| | COLLECTION POSITION (mm) | 12 | 12 | 8 | 20 | 12 | 20 | 12 |
| | $\Phi$ (mm) | 0.3 | 0.3 | 0.2 | 0.5 | 0.3 | 0.5 | 0.3 |
| TEMPERED GLASS | CT(MPa) | 36.3 | 36.5 | 36.5 | 40.8 | 40.8 | 43.6 | 43.6 |
| | t (cm) | 0.07 | 0.07 | 0.07 | 0.07 | 0.07 | 0.14 | 0.14 |
| $\alpha$ (/cm) | | 0.3 | 0.8 | 0.8 | 0.48 | 1.2 | 0.48 | 0.48 |
| $\alpha$ (/cm) $\times$ t(cm) | | 0.021 | 0.056 | 0.056 | 0.0336 | 0.084 | 0.0672 | 0.0672 |
| RATIO OF TRANSMITTED LIGHT (%) | | 97.92 | 94.55 | 94.55 | 96.70 | 91.94 | 93.50 | 93.50 |
| CUT OR NOT | | ○ | ○ | ○ | ○ | ○ | ○ | ○ |
| QUALITY OF CUT END PORTION | | ○ | ○ | ○ | ○ | ○ | ○ | ○ |
| QUALITY OF CUT SURFACE | | ○ | ○ | ○ | ○ | ○ | ○ | ○ |
| MAXIMUM SHIFTED AMOUNT (mm) | | 0 | 0.15 | 0 | 0 | 0 | 0 | 0 |

[Table 5]

| | | EXAMPLE 2-15 | EXAMPLE 2-16 | EXAMPLE 2-17 | EXAMPLE 2-18 | EXAMPLE 2-19 | EXAMPLE 2-20 |
|---|---|---|---|---|---|---|---|
| LASER BEAM | LIGHT SOURCE POWER (W) | 20 | 30 | 50 | 40 | 70 | 70 |
| | COLLECTION ANGLE (° ) | 5.7 | 5.7 | 1.4 | 1.4 | 1.4 | 1.4 |
| | COLLECTION POSITION (mm) | -4.8 | -3 | 20 | 12 | 20 | 12 |
| | Φ (mm) | 0.5 | 0.3 | 0.5 | 0.3 | 0.5 | 0.3 |
| TEMPERED GLASS | CT(MPa) | 47.4 | 47.4 | 50.8 | 50.8 | 74.6 | 74.6 |
| | t(cm) | 0.1 | 0.1 | 0.14 | 0.14 | 0.06 | 0.06 |
| $\alpha$ (/cm) | | 2.99 | 2.99 | 1.2 | 1.2 | 0.8 | 0.8 |
| $\alpha$ (/cm) $\times$t(cm) | | 0.299 | 0.299 | 0.168 | 0.168 | 0.048 | 0.048 |
| RATIO OF TRANSMITTED LIGHT (%) | | 74.16 | 74.16 | 84.54 | 84.54 | 95.31 | 95.31 |
| CUT OR NOT | | ○ | ○ | ○ | ○ | ○ | ○ |
| QUALITY OF CUT END PORTION | | ○ | ○ | ○ | ○ | ○ | ○ |
| QUALITY OF CUT SURFACE | | ○ | ○ | ○ | ○ | ○ | ○ |
| MAXIMUM SHIFTED AMOUNT (mm) | | 0 | 0 | 0 | 0 | 0 | 0 |

From Table 3 to Table 5, it can be understood that the propagation of the crack by the remaining tensile stress becomes dominant by setting the internal remaining tensile stres (CT) to be greater than or equal to 30 Mpa to have the maximum shifted amount become 0 mm.

(Example 3-1 to Example 3-8)

In Example 3-1 to Example 3-8 (examples), the cut results were evaluated by changing the size and shape of the irradiation area of the laser beam at the front surface of the chemically strengthened glass plate. Manufacturing of, cutting of and the evaluation of the evaluating chemically strengthened glass plate were performed similarly to Example 1-1 to Example 1-4.

The evaluated results are shown in Table 6 with cutting conditions and the like.

[Table 6]

| | | EXAMPLE 3-1 | EXAMPLE 3-2 | EXAMPLE 3-3 | EXAMPLE 3-4 | EXAMPLE 3-5 | EXAMPLE 3-6 | EXAMPLE 3-7 | EXAMPLE 3-8 |
|---|---|---|---|---|---|---|---|---|---|
| LASER BEAM | LIGHT SOURCE POWER (W) | 20 | 30 | 20 | 30 | 20 | 20 | 40 | 30 |
| | COLLECTION ANGLE (° ) | 5.7 | 5.7 | 5.7 | 5.7 | 5.7 | 5.7 | 11.4 | 5.7 |
| | COLLECTION POSITION (mm) | -1.8 | -3 | -4.8 | -10.3 | -1.8 | -4.8 | -4.8 | -10.3 |
| | Φ (mm) | 0.18 | 0.3 | 0.5 | 1.03 | 0.18 | 0.5 | 0.95 | 1.03 |
| TEMPERED GLASS | CT(MPa) | 47.4 | 47.4 | 47.4 | 47.4 | 21.4 | 21.4 | 21.4 | 21.4 |
| | t(cm) | 0.1 | 0.1 | 0.1 | 0.1 | 0.1 | 0.1 | 0.1 | 0.1 |
| $\alpha$ (/cm) | | 2.99 | 2.99 | 2.99 | 2.99 | 2.99 | 2.99 | 2.99 | 2.99 |
| $\alpha$ (/cm) × t(cm) | | 0.299 | 0.299 | 0.299 | 0.299 | 0.299 | 0.299 | 0.299 | 0.299 |
| RATIO OF TRANSMITTED LIGHT (%) | | 74.16 | 74.16 | 74.16 | 74.16 | 74.16 | 74.16 | 74.16 | 74.16 |
| CUT OR NOT | | ○ | ○ | ○ | ○ | ○ | ○ | ○ | ○ |
| QUALITY OF CUT END PORTION | | ○ | ○ | ○ | × | ○ | ○ | ○ | × |
| QUALITY OF CUT SURFACE | | × | ○ | ○ | ○ | × | ○ | ○ | ○ |
| MAXIMUM SHIFTED AMOUNT (mm) | | 0 | 0 | 0 | 0 | 0.15 | 0.2 | 0.2 | 0.2 |

From Table 6, it can be understood that the quality of the cut end portion or the quality of the cut surface is good when the irradiation area of the laser beam is formed to be a circular shape at the front surface of the chemically strengthened glass plate and the diameter (Φ) is greater than 0.18 mm and less than the thickness (1.0 mm) of the chemically strengthened glass plate. When the diameter (Φ) is 0.18 mm, there was a fine fissure at the cut surface. Further, when the diameter (Φ) is 1.03 mm, the cut end portion of the cut surface was slightly curved.

(Example 4-1 to Example 4-4)

In Example 4-1 to Example 4-4, the relationship between the maximum laser scanning speed at which the chemically strengthened glass plate is capable of being cut along the proposed line to be cut (without occurrence of automatic formation of a crack or breaking of the glass), and the diameter of the laser beam at the front surface of the chemically strengthened glass plate was examined.

The respective chemically strengthened glass plate includes $SiO_2$: 61.0%, $Al_2O_3$: 12.8%, MgO: 6.6%, CaO: 0.1%, SrO: 0.2%, BaO: 0.2%, $Na_2O$: 12.2%, $K_2O$: 5.9% and $ZrO_2$: 1.0%, mass % as calculated as oxide.

The front surface compression stress (CS) of each of the chemically strengthened glass plates was 735 MPa, the depth of the compression stress layer (DOL) was 51.2 (μm) and the internal tensile stress (CT) was 38 (MPa).

The chemically strengthened glass plate (300 mm × 300 mm × 1.1 mm) was cut by a cutting method shown in Fig. 10A and Fig. 10B. An initial crack was previously formed at a cut starting position at a side surface of the respective chemically strengthened glass plate by a file but scribe lines were not formed at the front surface of the respective chemically strengthened glass plate.

An exit of a nozzle was formed to have a circular shape having a diameter of 2 mm and positioned at a position such that a gap G (see Fig. 10A) between the front surface of the respective chemically strengthened glass plate was 3 mm. The compressed air at room temperature was ejected toward the front surface of the respective chemically strengthened glass plate from the exit of the nozzle at a flow rate of 100 L / min.

The center axis of the nozzle and the optical axis of the laser beam were coaxially provided to be perpendicular to the front surface of the respective chemically strengthened glass plate.

For the light source of the laser beam, a fiber-laser (center wavelength: 1070 nm) was used. The absorption coefficient of the respective chemically strengthened glass plate with respect to the laser beam was measured using a UV-visible near-infrared spectrophotometer Lambda 950.

The collection position of the laser beam was provided at a position 0 to 2.8 mm above (an opposite side of the back surface) from the front surface of the respective chemically strengthened glass plate. The collection angle of the laser beam was 4°.

The center of the laser beam was moved from one end to the other end of the proposed line to be cut for 300 mm at a plane the same as the front surface of the respective chemically strengthened glass plate. The proposed line to be cut, which is the moving path, was a straight line parallel to one of the edges (shorter edge) of the rectangular shape chemically strengthened glass plate, where the distance from the edge was 10 mm.

The center of the laser beam was moved from a cut starting end of the proposed line to be cut for 15 mm at a speed of 2.5 mm /sec while setting the diameter of the laser beam to be 0.2 mm, and subsequently, the diameter of the laser beam was changed to the diameter as shown in Table 7 while moving the center of the laser beam for a further 5 mm, at a plane the same as the front surface of the respective chemically strengthened glass plate. Thereafter, the moving speed of the laser beam was accelerated to a targeted speed and maintained at the targeted speed. The maximum speed at which the glass was cut is shown in Table 7.

[Table 7]

| | | EXAMPLE 4-1 | EXAMPLE 4-2 | EXAMPLE 4-3 | EXAMPLE 4-4 |
|---|---|---|---|---|---|
| LASER BEAM | LIGHT SOURCE POWER (W) | 120 | 120 | 120 | 120 |
| | COLLECTION ANGLE (° ) | 4 | 4 | 4 | 4 |
| | COLLECTION POSITION (mm) | 0 | 0.7 | 1.4 | 2.8 |
| | Φ (mm) | 0.02 | 0.05 | 0.1 | 0.2 |
| TEMPERED GLASS | CT(MPa) | 38 | 38 | 38 | 38 |
| | t(cm) | 0.11 | 0.11 | 0.11 | 0.11 |

(continued)

| | EXAMPLE 4-1 | EXAMPLE 4-2 | EXAMPLE 4-3 | EXAMPLE 4-4 |
|---|---|---|---|---|
| $\alpha$ (/cm) | 0.09 | 0.09 | 0.09 | 0.09 |
| $\alpha$ (/cm) $\times$ t (cm) | 0.010 | 0.010 | 0.010 | 0.010 |
| RATIO OF TRANSMITTED LIGHT (%) | 99.01 | 99.01 | 99.01 | 99.01 |
| MAXIMUM SPEED CAPABLE OF CUTTING GLASS (mm/s) | 60 | 60 | 50 | 30 |

From Table 7, it can be understood that the scanning speed of the laser beam can be improved as the diameter of the laser beam becomes smaller when the light source power is constant. When the power of the light source of the laser beam is constant, as the diameter of the laser beam at the front surface of the chemically strengthened glass plate becomes smaller, the power density (W / $mm^2$) of the laser beam is increased so that the heating period can be shortened.

(Example 5-1 to Example 5-2)

In Example 5-1 to Example 5-2, the relationship between the minimum light source power capable of cutting the chemically strengthened glass plate at the proposed line to be cut (without occurrence of automatic formation of a crack or breaking of the glass) and whether the nozzle is used was examined.

For each of the chemically strengthened glass plates, the glass (CS = 699 (MPa), DOL = 64.8 ($\mu$m), CT = 46.7 (MPa)) having the same composition as Example 4-1 was used.

The respective chemically strengthened glass plate (150 mm x100 mm $\times$ 1.1 mm) was cut by the method shown in Fig. 10A and Fig. 10B. An initial crack was previously formed at a cut starting position at a side surface of the respective chemically strengthened glass plate by a file but scribe lines were not formed at the front surface of the chemically strengthened glass plate.

For the light source of the laser beam, a fiber-laser (center wavelength: 1070 nm) was used. The absorption coefficient of the respective chemically strengthened glass plate with respect to the laser beam was measured using a UV-visible near-infrared spectrophotometer Lambda 950.

The collection position of the laser beam was provided at a position 0 mm above (an opposite side of the back surface) from the front surface of the respective chemically strengthened glass plate. The collection angle of the laser beam was 8.9°.

The center of the laser beam was moved from one end to the other end of the proposed line to be cut for 150 mm at a plane the same as the front surface of the respective chemically strengthened glass plate. The proposed line to be cut, which is the moving path, was a straight line parallel to one of the edges (shorter edge) of the rectangular shape chemically strengthened glass plate, where the distance from the edge was 10 mm.

The irradiation area of the laser beam was moved from a cut starting end of the proposed line to be cut for 15 mm at a speed of 2.5 mm /sec while setting the diameter of the laser beam to be 0.2 mm, and subsequently, the diameter of the laser beam was reduced from 0.2 mm to 0.1 mm while moving the center of the laser beam for a further 5 mm, at a plane the same as the front surface of the respective chemically strengthened glass plate. Thereafter, the moving speed of the laser beam was accelerated to a targeted speed (10 mm /sec) and maintained at the targeted speed. The reason that the moving speed was slowed at start of cutting is that it takes time to form the crack.

In Example 5-1, the nozzle was not used, in Example 5-2, the nozzle was used and the coolant gas was sprayed on the front surface of the chemically strengthened glass plate. The center axis of the nozzle was coaxially provided with the optical axis of the laser beam such to be perpendicular to the front surface of the respective chemically strengthened glass plate. An exit of the nozzle was formed to have a circular shape having a diameter of 1 mm and is positioned at a position such that a gap G (see Fig. 10A) between the front surface of the respectively chemically strengthened glass plate was 2 mm. Compressed air at room temperature was ejected toward the front surface of the respective chemically strengthened glass plate from the exit of the nozzle at a flow rate of 15 L / min. The minimum light source power at which the glass was cut is shown in Table 8.

[Table 8]

| | | EXAMPLE 5-1 | EXAMPLE 5-2 |
|---|---|---|---|
| LASER BEAM | LIGHT SOURCE POWER (W) | 70 | 55 |
| | COLLECTION ANGLE (° ) | 8.9 | 8.9 |
| | COLLECTION POSITION (mm) | 0 | 0 |
| | Φ (mm) | 0.1 | 0.1 |
| NOZZLE | | NO | YES |
| TEMPERED GLASS | CT(MPa) | 46.7 | 46.7 |
| | t(cm) | 0.11 | 0.11 |
| α (/cm) | | 0.09 | 0.09 |
| $\alpha$ (/cm) × t(cm) | | 0.010 | 0.010 |
| RATIO OF TRANSMITTED LIGHT (%) | | 99.01 | 99.01 |
| CUT OR NOT | | ○ | ○ |

From Table 8, it can be understood that the light source power can be reduced by using the nozzle ejecting the coolant gas.

(Example 6-1 to Example 6-5)

In Example 6-1 to Example 6-5, the relationship between the minimum light source power at which the chemically strengthened glass plate is cut along the proposed line to be cut (without occurrence of automatic formation of a crack or breaking of the glass), and the collection position of the laser beam was examined.

For the chemically strengthened glass plate, the glass (CS = 699 (MPa), DOL = 64.8 (μm), CT = 46.7 (MPa)) having the same composition as Example 5-1 was used.

The respective chemically strengthened glass plate (150 mm x100 mm ×1.1 mm) was cut by the cutting method shown in Fig. 10A and Fig. 10B. An initial crack was previously formed at a cut starting position at a side surface of the respective chemically strengthened glass plate by a file but scribe lines were not formed at the front surface of each of the chemically strengthened glass plates.

For the light source of the laser beam, a fiber-laser (center wavelength: 1070 nm) was used. The absorption coefficient of the respective chemically strengthened glass plate with respect to the laser beam was measured using a UV-visible near-infrared spectrophotometer Lambda 950.

The center of the laser beam was moved from one end to the other end of the proposed line to be cut for 150 mm at a plane the same as the front surface of the chemically strengthened glass plate. The proposed line to be cut, which is the moving path, was a straight line parallel to one of the edges (shorter edge) of the rectangular shape chemically strengthened glass plate, where the distance from the edge was 10 mm.

The diameter of the laser beam was moved from a cut starting end of the proposed line to be cut for 15 mm at a speed of 2.5 mm /sec while setting the diameter of the laser beam to be 0.2 mm, and subsequently, the diameter of the laser beam was reduced from 0.2 mm to 0.1 mm while moving the center of the laser beam for a further 5 mm, at a plane the same as the front surface of the respective chemically strengthened glass plate. Thereafter, the moving speed of the laser beam was accelerated to a targeted speed (10 mm /sec) and maintained at the targeted speed. The reason that the moving speed was slowed at start of cutting is that it takes time to form the crack.

The collection position of the laser beam was set to be a position 1.3 mm above the front surface of the chemically strengthened glass plate (an opposite side of the back surface) when the moving speed of the laser beam was low. The collection position of the laser beam was changed before the moving speed of the laser beam was changed from low to high. The collection position of the laser beam after the change was, 0.4 mm above the front surface of the chemically strengthened glass plate for Example 6-1, at the front surface of the chemically strengthened glass plate for Example 6-2, at the center position of the chemically strengthened glass plate in the thickness direction for Example 6-3, at the back surface of the chemically strengthened glass plate for Example 6-4, and 0.4 mm below the back surface of the chemically strengthened glass plate for Example 6-5.

The center axis of the nozzle was coaxially provided with the optical axis of the laser beam such that to be perpendicular to the front surface of the respective chemically strengthened glass plate.

An exit of the nozzle was formed to have a circular shape having a diameter of 1 mm and positioned at a position such that a gap G (see Fig. 10A) between the front surface of the respective chemically strengthened glass plate was 2 mm. Compressed air at room temperature was ejected toward the front surface of the respective chemically strengthened glass plate from the exit of the nozzle at a flow rate of 15 L / min. The minimum light source power at which the glass was cut is shown in Table 9.

[Table 9]

| | | EXAMPLE 6-1 | EXAMPLE 6-2 | EXAMPLE 6-3 | EXAMPLE 6-4 | EXAMPLE 6-5 |
|---|---|---|---|---|---|---|
| LASER BEAM | LIGHT SOURCE POWER (W) | 60 | 55 | 50 | 48 | 55 |
| | Φ (mm) | 0.1 | 0.1 | 0.1 | 0.1 | 0.1 |
| | COLLECTION POSITION | ABOVE FRONT SURFACE | FRONT SURFACE | CENTER | BACK SURFACE | BELOW BACK SURFACE |
| TEMPERED GLASS | CT(MPa) | 46.7 | 46.7 | 46.7 | 46.7 | 46.7 |
| | t(cm) | 0.11 | 0.11 | 0.11 | 0.11 | 0.11 |
| $\alpha$ (/cm) | | 0.09 | 0.09 | 0.09 | 0.09 | 0.09 |
| $\alpha$ (/cm) × t(cm) | | 0.010 | 0.010 | 0.010 | 0.010 | 0.010 |
| RATIO OF TRANSMITTED LIGHT (%) | | 99.01 | 99.01 | 99.01 | 99.01 | 99.01 |
| CUT OR NOT | | ○ | ○ | ○ | ○ | ○ |

From Table 9, it can be understood that it is preferable that the collection position of the laser beam is positioned between the front surface and the back surface of the chemically strengthened glass plate and it is more preferably that the collection position of the laser beam is positioned closer to the back surface, in order to reduce the light source power.

(Example 7-1 to Example 7-2)

In Example 7-1 to Example 7-2, whether chemically strengthened glass plates of different glass composition were cut was examined.

In Example 7-1, the chemically strengthened glass plate having the same composition as that in Example 4-1 was cut. On the other hand, in Example 7-2, a chemically strengthened glass plate including $SiO_2$: 62.0%, $Al_2O_3$: 17.1%, MgO: 3.9%, CaO: 0.6%, $Na_2O$: 12.7%, $K_2O$: 3.5% and $SnO_2$: 0.3%, mass % as calculated as oxide, was cut.

The respective chemically strengthened glass plate (120 mm × 100 mm × 0.8 mm) was cut by the cutting method shown in Fig. 10A and Fig. 10B. An initial crack was previously formed at a cut starting position at a side surface of the respective chemically strengthened glass plate by a file but scribe lines were not formed at the front surface of the chemically strengthened glass plate.

For the light source of the laser beam, a fiber-laser (center wavelength: 1070 nm) was used. The absorption coefficient of the respective chemically strengthened glass plate with respect to the laser beam was measured using a UV-visible near-infrared spectrophotometer Lambda 950.

The center of the laser beam was moved from one end to the other end of the proposed line to be cut at a plane the same as the front surface of the respective chemically strengthened glass plate. As shown in Fig. 13, the proposed line to be cut 11, which is the moving path, includes two straight line portions (length 55 mm) 11-1 and 11-4 and two curved portions (1/4 circular arc portion of a circle having a radius of 5 mm) 11-2 and 11-3 provided between the two straight line portions 11-1 and 11-4.

The diameter of the laser beam was moved from a cut starting end of the proposed line to be cut for 15 mm at a speed of 2.5 mm /sec while setting the diameter of the laser beam to be 0.2 mm, and subsequently, the diameter of the laser beam was reduced from 0.2 mm to 0.1 mm while moving the center of the laser beam for a further 5 mm, at a plane the same as the front surface of the respective chemically strengthened glass plate. Thereafter, the moving speed of the laser beam was accelerated to a targeted speed (10 mm /sec) and maintained at the targeted speed. The reason that the moving speed was slowed at start of cutting is that it takes time to form the crack.

The collection position of the laser beam was provided at a position 0 mm above (an opposite side of the back surface) the front surface of the respective chemically strengthened glass plate. The collection angle of the laser beam was 8.9°.

The center axis of the nozzle was coaxially provided with the optical axis of the laser beam so that to be perpendicular to the front surface of the chemically strengthened glass plate.

An exit of the nozzle was formed to have a circular shape having a diameter of 2 mm and positioned at a position such that a gap G (see Fig. 10A) between the front surface of the respective chemically strengthened glass plate was 3 mm. Compressed air at room temperature was ejected toward the front surface of the chemically strengthened glass plate from the exit of the nozzle at a flow rate of 50 L / min.

The evaluated results for cutting are shown in Table 10 with cutting conditions and the like.

[Table 10]

| | | EXAMPLE 7-1 | EXAMPLE 7-2 |
|---|---|---|---|
| LASER BEAM | LIGHT SOURCE POWER (W) | 37.5 | 200 |
| | COLLECTION ANGLE (° ) | 8.9 | 8.9 |
| | COLLECTION POSITION (mm) | 0 | 0 |
| | Φ (mm) | 0.1 | 0.1 |
| TEMPERED GLASS | CT(MPa) | 37.4 | 48 |
| | t(cm) | 0.08 | 0.08 |
| $\alpha$ (/cm) | | 0.09 | 0.04 |
| $\alpha$ (/cm) × t(cm) | | 0.007 | 0.003 |
| RATIO OF TRANSMITTED LIGHT (%) | | 99.28 | 99.68 |
| CUT OR NOT | | ○ | ○ |

From Table 10, it can be understood that chemically the glass composition of the strengthened glass plate is not specifically limited.

(Example 8-1 to Example 8-2)

In Example 8-1 to Example 8-2, the irradiation area of the laser beam was moved on the front surface of the chemically strengthened glass plate similarly as Example 5-2 except that the laser beam was obliquely injected into the front surface of the chemically strengthened glass plate (see Fig. 11A and Fig. 11B).

The evaluated results for cutting are shown in Table 11 with cutting conditions and the like.

[Table 11]

| | | EXAMPLE 8-1 | EXAMPLE 8-2 |
|---|---|---|---|
| LASER BEAM | LIGHT SOURCE POWER (W) | 60 | 60 |
| | Φ (mm) | 0.1 | 0.1 |
| | ANGLE-OF-INCIDENCE $\beta$ (° ) | 23.0 | 40.0 |
| | ANGLE OF REFRACTION $\gamma$(° ) | 15.1 | 25.4 |
| TEMPERED GLASS | CT(MPa) | 46.7 | 46.7 |
| | t(cm) | 0.11 | 0.11 |
| $\alpha$ (/cm) | | 0.09 | 0.09 |
| $\alpha$ (/cm) ×t(cm)/cosγ | | 0.010 | 0.011 |
| RATIO OF TRANSMITTED LIGHT (%) | | 98.98 | 98.91 |
| CUT OR NOT | | ○ | ○ |
| INCLINED ANGLE OF CUT SURFACE | | 14.4 | 23.2 |

From Table 11, it can be understood the cut surface is inclined with respect to the thickness direction by obliquely injecting the laser beam with respect to the front surface of the chemically strengthened glass plate. Further, it can also be understood that the inclined angle of the cut surface is substantially the same as an angle of refraction of the laser beam.

(Example 9)

In Example 9, whether a stacked body in which three of the chemically strengthened glass plates are stacked is cut was examined.

For the three chemically strengthened glass plates, glass having the same composition and characteristics (CS = 735 (MPa), DOL = 51.2 (μm), CT = 37.7(MPa)) as those of Example 4-1 were used.

The three chemically strengthened glass plates (150 mm × 100 mm × 1.1 mm) were cut at the same time by the method shown in Fig. 12. An initial crack was previously formed at a cut starting position at a side surface of each of the chemically strengthened glass plates by a file but scribe lines were not formed at the front surface of each of the chemically strengthened glass plates.

A fiber-laser (center wavelength range: 1075 to 1095 nm, the light source power: 80W) was used as the light source of the laser beam. The absorption coefficient of each of the chemically strengthened glass plates with respect to the laser beam was measured using a UV-visible near-infrared spectrophotometer Lambda 950.

The collection position of the laser beam was positioned at a position 9 mm above the upper surface of the stacked body. The collection angle of the laser beam was 1.6°.

The diameter of the laser beam at a plane the same as the upper surface of each of the chemically strengthened glass plates was, 0.24 mm, 0.27 mm, 0.30 mm, respectively, from the upper side.

The center of the laser beam was moved at a constant speed of 2.5 mm /sec from one end to the other end of the proposed line to be cut for 150 mm at a plane the same as the front surface of each of the chemically strengthened glass plates. The proposed line to be cut, which is the moving path, was a straight line parallel to one of the edges (shorter edge) of the rectangular shape chemically strengthened glass plate, where the distance from the edge was 10 mm.

As a result, the three chemically strengthened glass plates were cut at the same time along the proposed line to be cut. Automatic formation of a crack or breaking of the glass was not observed.

(Example 10-1 to Example 10-2)

In Example 10-1 to Example 10-2, whether an thermally strengthened glass plate was cut is examined.

Each of the thermally strengthened glass plates was manufactured by dissolving a glass material prepared by mixing a plurality of kinds of materials, shaping the dissolved molten glass into a place to be gradually cooled to near room temperature, cutting, machining, and mirror finishing both surfaces. During cooling, the glass near its softening point was quenched from the front surface and the back surface to form the front surface layer and the back surface layer in which compression stresses remain, respectively. The quenching condition was set such that the internal remaining tensile stress (CT) became a desired value.

Each of the thermally strengthened glass plates includes $SiO_2$: 72.4%, $Al_2O_3$: 1.9%, MgO: 3.8%, CaO: 8.3%, $Na_2O$: 12.7% and $K_2O$: 1.0%, mass % as calculated as oxide.

The maximum remaining tensile stress (CM) of the respective thermally strengthened glass plate was obtained by measuring a front surface compression stress (CS) using a front surface stress measuring device FSM-6000 (manufactured by Orihara Manufacturing Co., LTD.) and calculating using the following equation (III) based on the measured values.

$$CM = CS / a \quad (III)$$

In the equation (III), "a" is a constant number defined by the temperature when the quench of the glass is started, the quenching speed of the glass, the thickness of the glass or the like, and generally is within a range from 2.2 to 2.5. In Example 10-1 to Example 10-2, the value of "a" was 2.35.

The respective thermally strengthened glass plate (300 mm × 300 mm × 5 mm) was cut by the cutting method shown in Fig. 1A and Fig. 1B. An initial crack was not formed at a cut starting position at a side surface of each of the thermally strengthened glass plates before cutting, as the side surface of the thermally strengthened glass plate was previously grinded by a rotating grinder before cutting. Further, scribe lines were not formed on the front surface of each of the thermally strengthened glass plates.

A fiber-laser (center wavelength: 1070 nm) was used for the light source of the laser beam. The absorption coefficient of the respective thermally strengthened glass plate with respect to the laser beam was measured using a UV-visible near-infrared spectrophotometer Lambda 950.

The optical axis of the laser beam was provided to be perpendicular to the front surface of the thermally strengthened glass plate.

The collection position of the laser beam was provided at a position 25.6 mm above (an opposite side of the back surface) the front surface of the respective thermally strengthened glass plate. The collection angle of the laser beam was 8.9°.

The center of the laser beam was moved from one end to the other end of the proposed line to be cut for 300 mm at a plane the same as the front surface of the thermally strengthened glass plate. The proposed line to be cut, which is the moving path, was a straight line parallel to one of the edges (shorter edge) of the rectangular shape thermally strengthened glass plate, where the distance from the edge was 20 mm.

The irradiation area of the laser beam was moved at a constant speed of 2.5 mm /sec while setting the diameter of the laser beam to be 4 mm at the front surface of the respective thermally strengthened glass plate. When the center of the laser beam was within 15 mm from the cut starting end, the light source power of the laser beam was set to be 200 W for Example 10-1 and 240 W for Example 10-2. Thereafter, the light source power of the laser beam was setback to 100 W.

[Table 12]

| | | EXAMPLE 10-1 | EXAMPLE 10-2 |
|---|---|---|---|
| LASER BEAM | LIGHT SOURCE POWER (W) | 100 | 100 |
| | COLLECTION ANGLE (° ) | 8.9 | 8.9 |
| | COLLECTION POSITION (mm) | 25.6 | 25.6 |
| | Φ (mm) | 4 | 4 |
| TEMPERED GLASS | CT (MPa) | 55 | 81 |
| | t(cm) | 0.5 | 0.5 |
| $\alpha$ (/cm) | | 0.57 | 0.57 |
| $\alpha$ (/cm) × t(cm) | | 0.285 | 0.285 |
| RATIO OF TRANSMITTED LIGHT (%) | | 75.20 | 75.20 |
| CUT OR NOT | | ○ | ○ |

It can be understood that the present invention is applicable for the thermally strengthened glass plate from Table 12.

The present invention is not limited to the specifically disclosed embodiments, and numerous variations and modifications and modifications may be made without departing from the spirit and scope of the present invention.

For example, as illustrated in Fig. 6 of the above embodiment, when the film 18 is formed on the front surface 12 of the strengthened glass plate 10, the glass may be cut after the film 18 is removed along the proposed line to be cut by a pulse laser. A method of removing the film 18 is not limited to a method using a laser beam such as a pulse laser or the like, but may be any method capable of removing a film such as a method using a mechanical means or the like.

The present application is based on and claims the benefit of priority of Japanese Priority Application No. 2011-003496 filed on January 11, 2011, and Japanese Priority Application No. 2011-190024 filed on August 31, 2011, the entire contents of which are hereby incorporated by reference.

10 strengthened glass plate
11 proposed line to be cut
12 front surface
13 front surface layer
14 back surface
15 back surface layer
17 intermediate layer
20 laser beam
21 optical axis of laser beam
22 irradiation area of laser beam
30 crack
40 gas

42 spraying area of gas
50 nozzle
51 center axis of nozzle
52 exit of nozzle
110 stacked body
112 front surface of stacked body

**Claims**

1. A method of cutting a strengthened glass in which a strengthened glass plate is cut by irradiating a laser beam on a front surface of the strengthened glass plate and moving an irradiation area of the laser beam along a proposed line to be cut on the front surface,
the strengthened glass plate including,
a front surface layer and a back surface layer in each of which a compression stress remains, respectively, and an intermediate layer formed between the front surface layer and the back surface layer, in which a tensile stress remains, the method comprising:
cutting the strengthened glass plate by heating the intermediate layer at the irradiation area of the laser beam at a temperature less than or equal to an annealing point while transmitting 70.0% to 99.8% of the laser beam having a wavelength between 800 to 1100 nm injected into the front surface and moving the irradiation area of the laser beam at a speed greater than or equal to 1.0 mm /sec, so that a crack, which penetrates the strengthened glass plate in a thickness direction of the strengthened glass plate, follows the irradiation area.

2. The method of cutting a strengthened glass plate according to claim 1,
wherein the proposed line to be cut has a substantially rectangular shape, and the strengthened glass plate is cut into a rectangular shape.

3. The method of cutting a strengthened glass plate according to claim 1 or 2,
wherein the internal remaining tensile stress of the intermediate layer is greater than or equal to 15 MPa.

4. The method of cutting a strengthened glass plate according to claim 3,
wherein the internal remaining tensile stress of the intermediate layer is greater than or equal to 30 MPa.

5. The method of cutting a strengthened glass plate according to any one of claims 1 to 4,
wherein at the front surface of the strengthened glass plate, the irradiation area of the laser beam is formed to have a circular shape having a diameter smaller than the thickness of the strengthened glass plate.

6. The method of cutting a strengthened glass plate according to any one of claims 1 to 5,
wherein the strengthened glass plate is a chemically strengthened glass.

7. The method of cutting a strengthened glass plate according to claim 6,
wherein the thickness of the strengthened glass plate is greater than or equal to 0.01 cm and less than or equal to 0.2 cm.

8. The method of cutting a strengthened glass plate according to any one of claims 1 to 5,
wherein the strengthened glass plate is an thermally strengthened glass.

9. The method of cutting a strengthened glass plate according to claim 8,
wherein the thickness of the strengthened glass plate is greater than or equal to 0.1 cm and less than or equal to 3 cm.

10. The method of cutting a strengthened glass plate according to any one of claims 1 to 9,
wherein the optical axis of the laser beam is oblique with respect to the front surface of the strengthened glass plate.

11. The method of cutting a strengthened glass plate according to any one of claims 1 to 10,
wherein at the front surface of the strengthened glass plate, the circularity of the irradiation area is less than or equal to 0.5R, where R is a radius of a circumscribed circle of the irradiation area of the laser beam.

12. The method of cutting a strengthened glass plate according to any one of claims 1 to 11,

wherein the collection position of the laser beam is positioned in the intermediate layer of the strengthened glass plate.

**13.** The method of cutting a strengthened glass plate according to any one of claims 1 to 12, further comprising:

spraying a gas onto a front surface of the strengthened glass plate and moving a spraying area of the gas in association with the irradiation area of the laser beam on the front surface of the strengthened glass plate.

**14.** The method of cutting a strengthened glass plate according to claim 13, wherein the gas is a coolant gas that locally cools the strengthened glass plate.

# FIG.1A

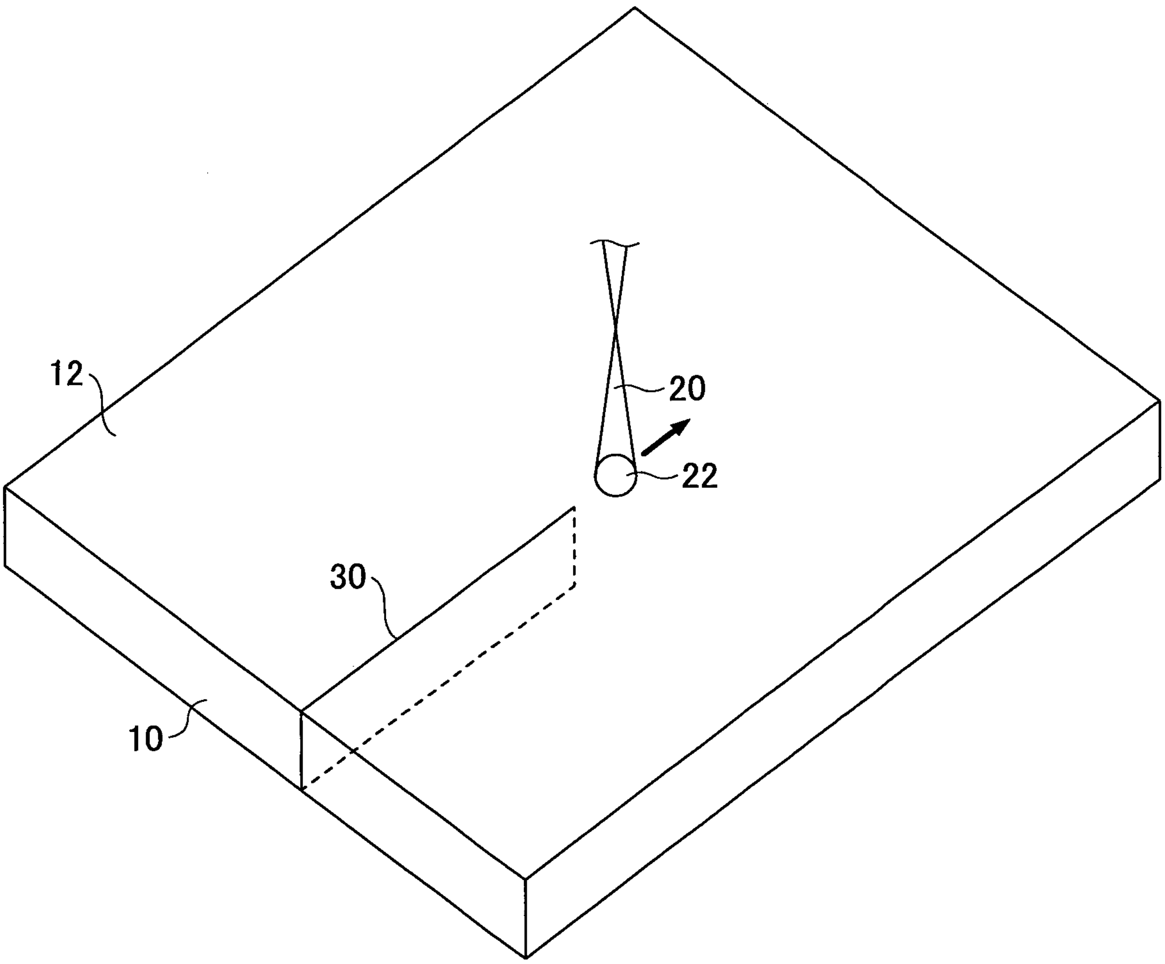

FIG.1B

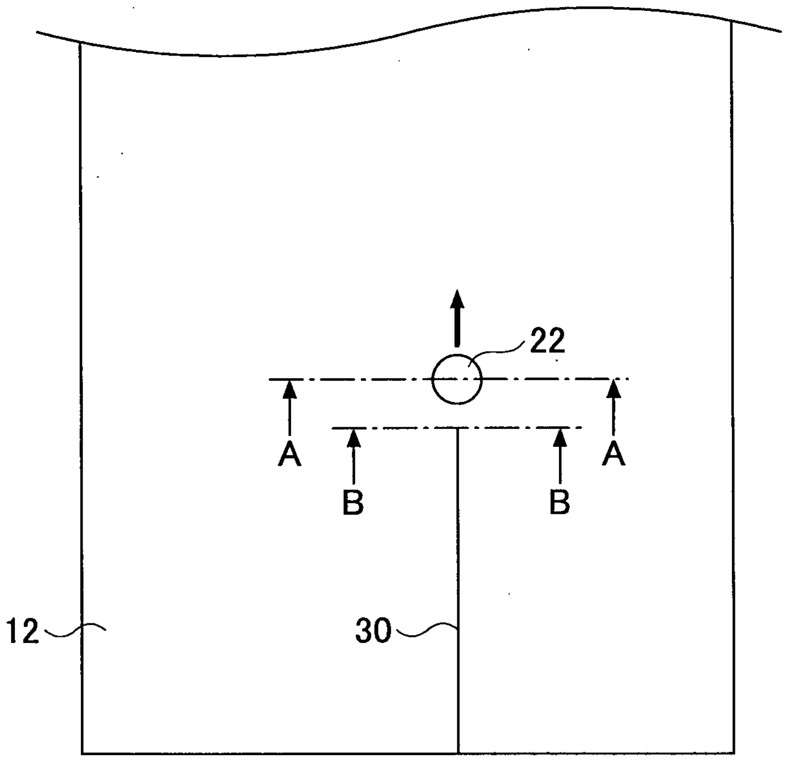

FIG.2A

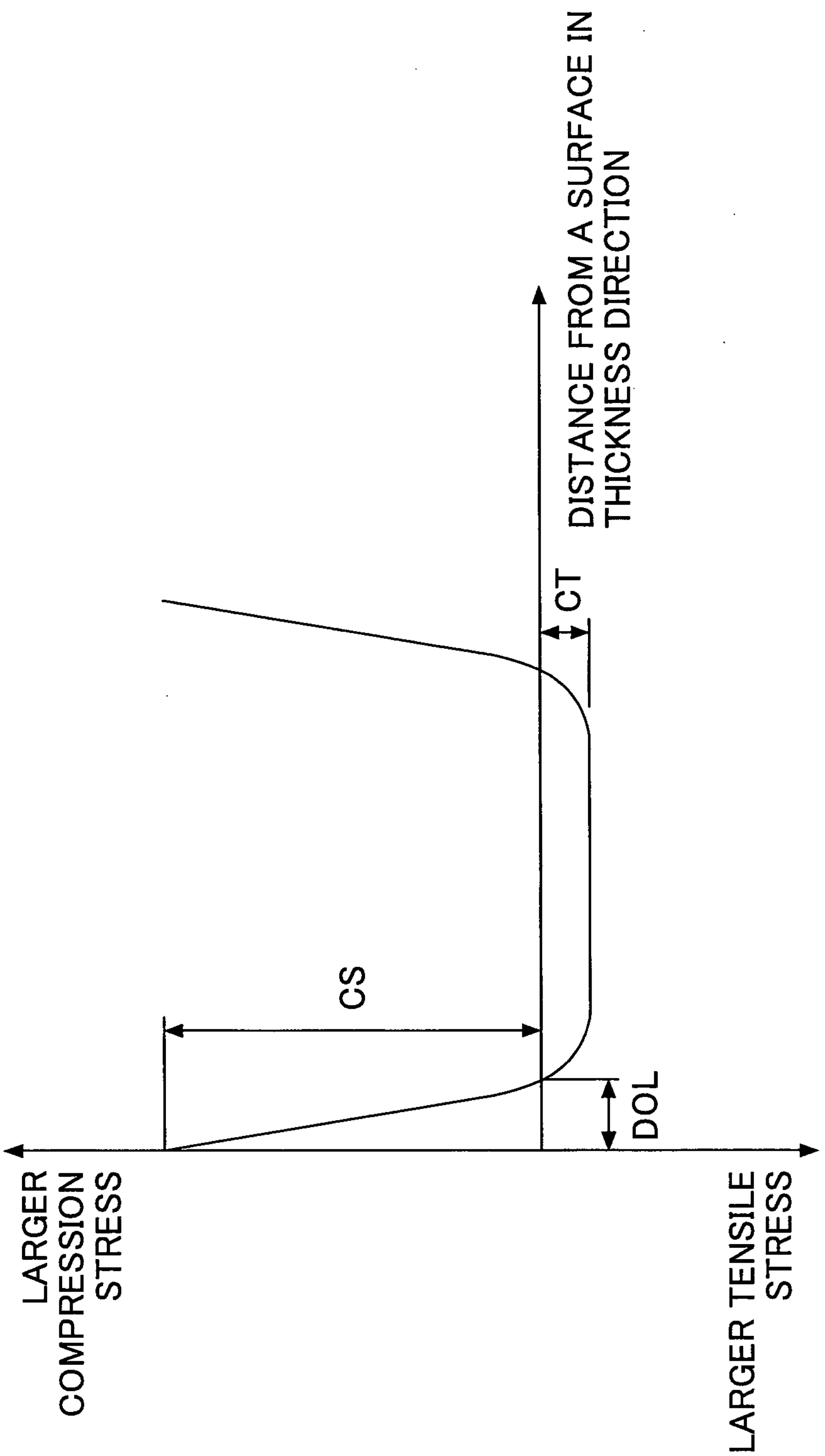
DISTANCE FROM A SURFACE IN THICKNESS DIRECTION
CT
CS
DOL
LARGER COMPRESSION STRESS
LARGER TENSILE STRESS

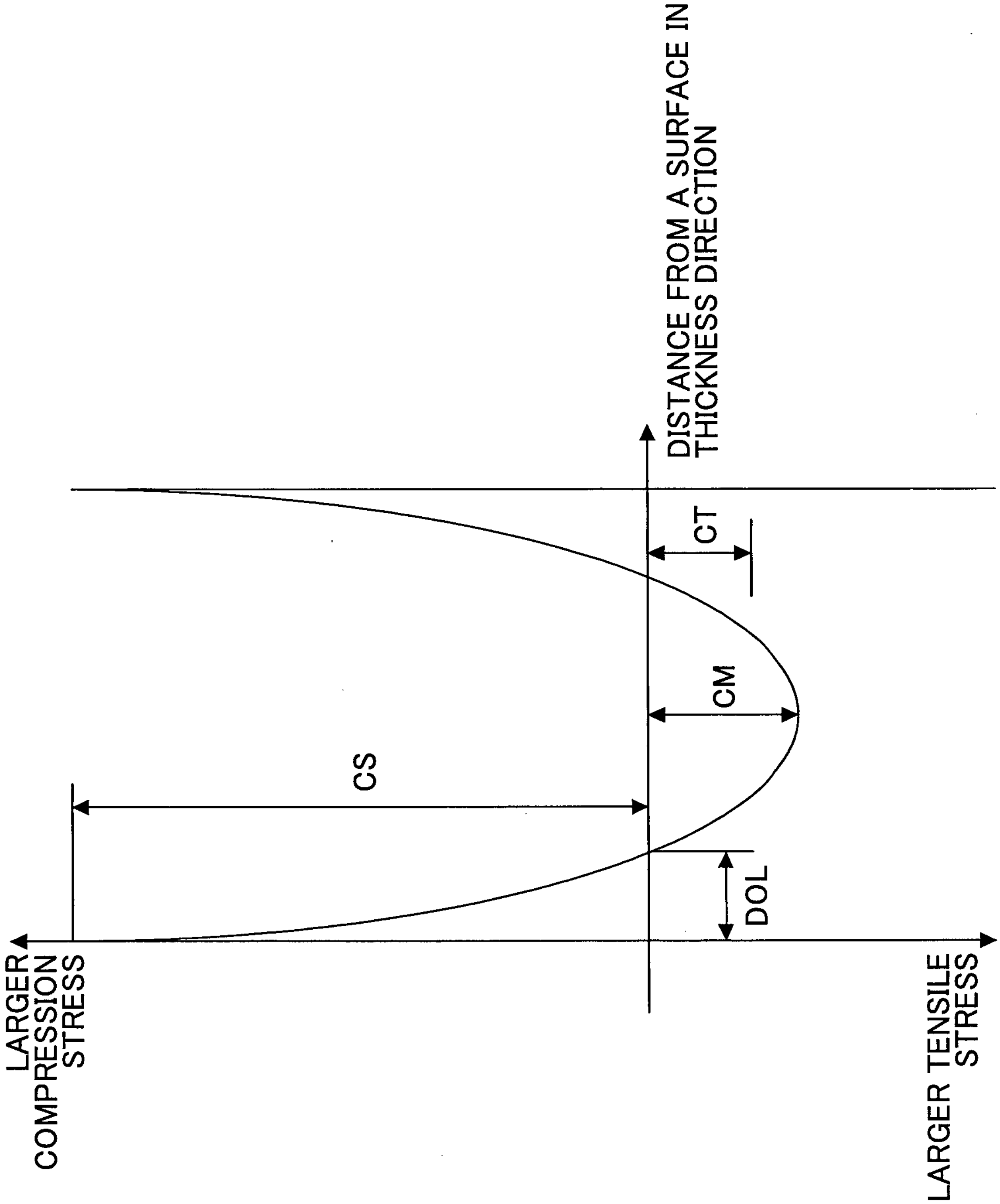
DISTANCE FROM A SURFACE IN THICKNESS DIRECTION
CT
CM
CS
DOL
LARGER COMPRESSION STRESS
LARGER TENSILE STRESS

FIG.2B

FIG.3

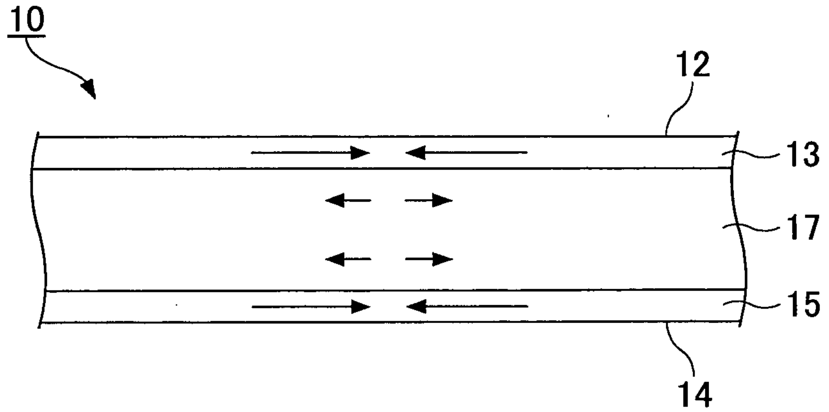


FIG.4

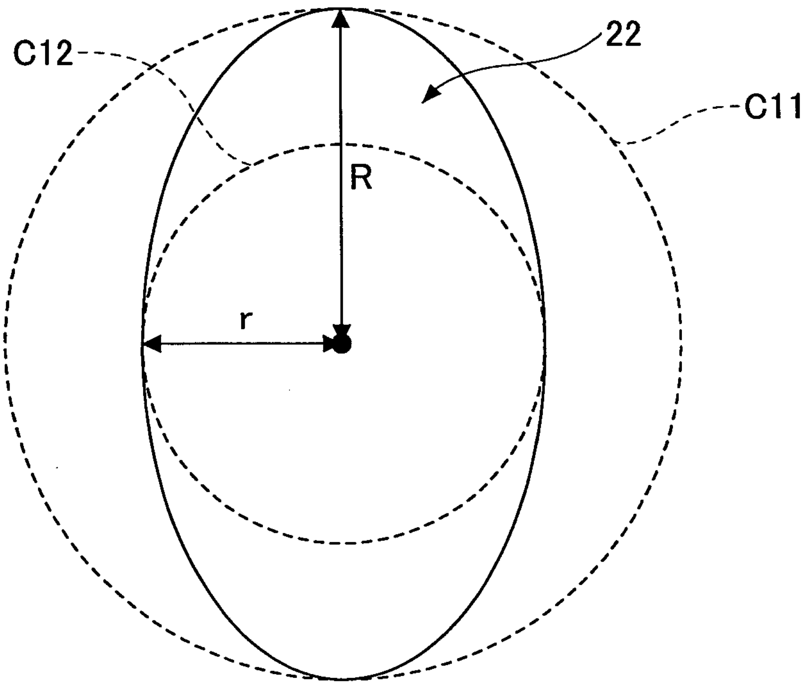

FIG.5

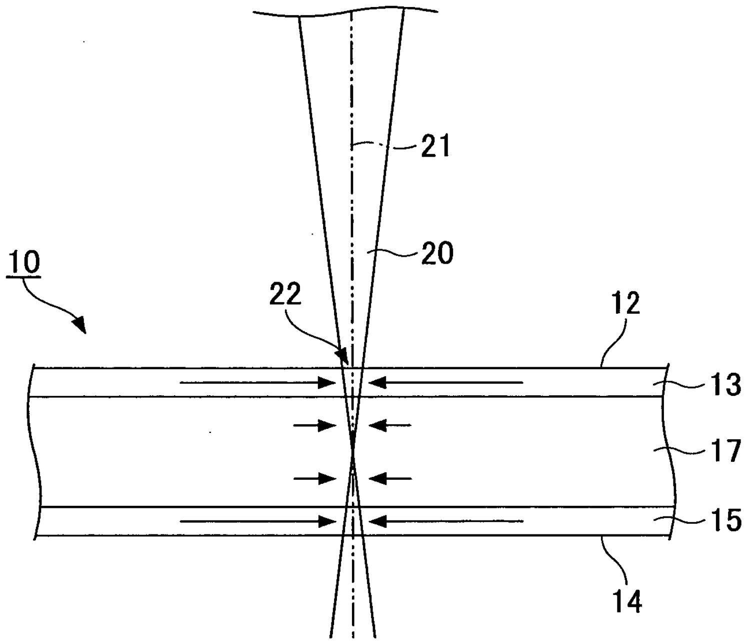


FIG.6

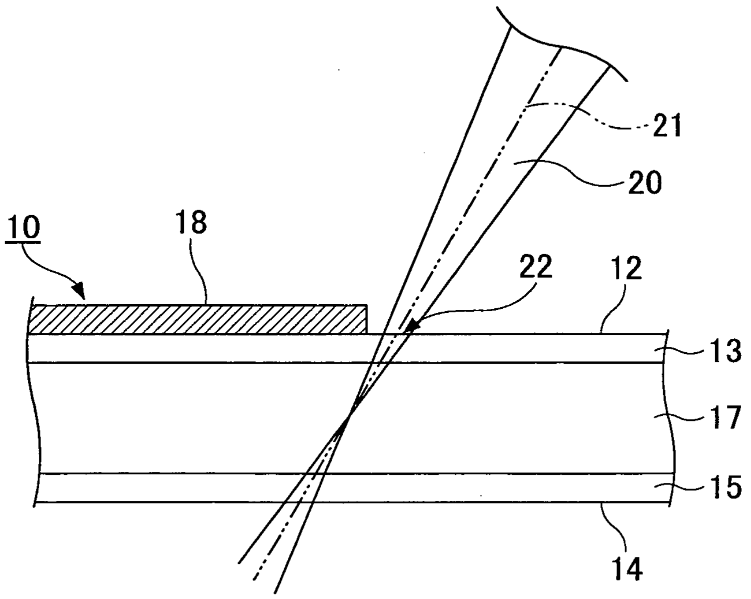

FIG.7

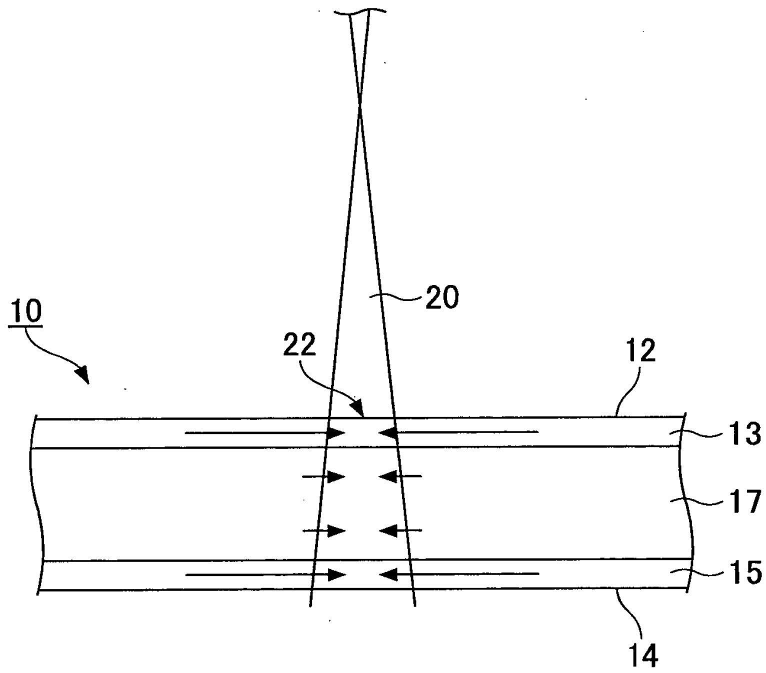


FIG.8

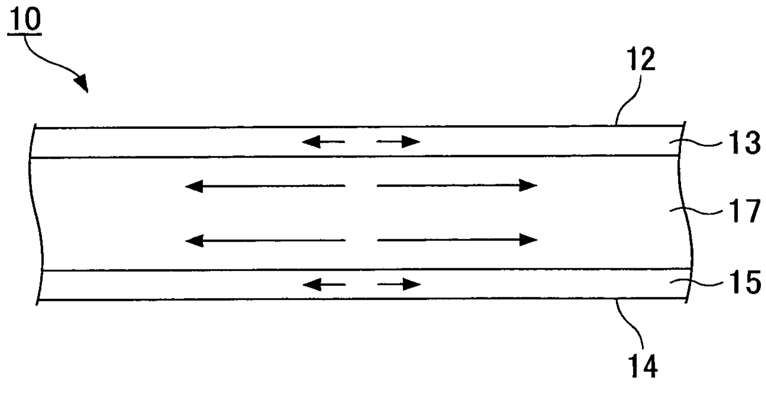

FIG.9

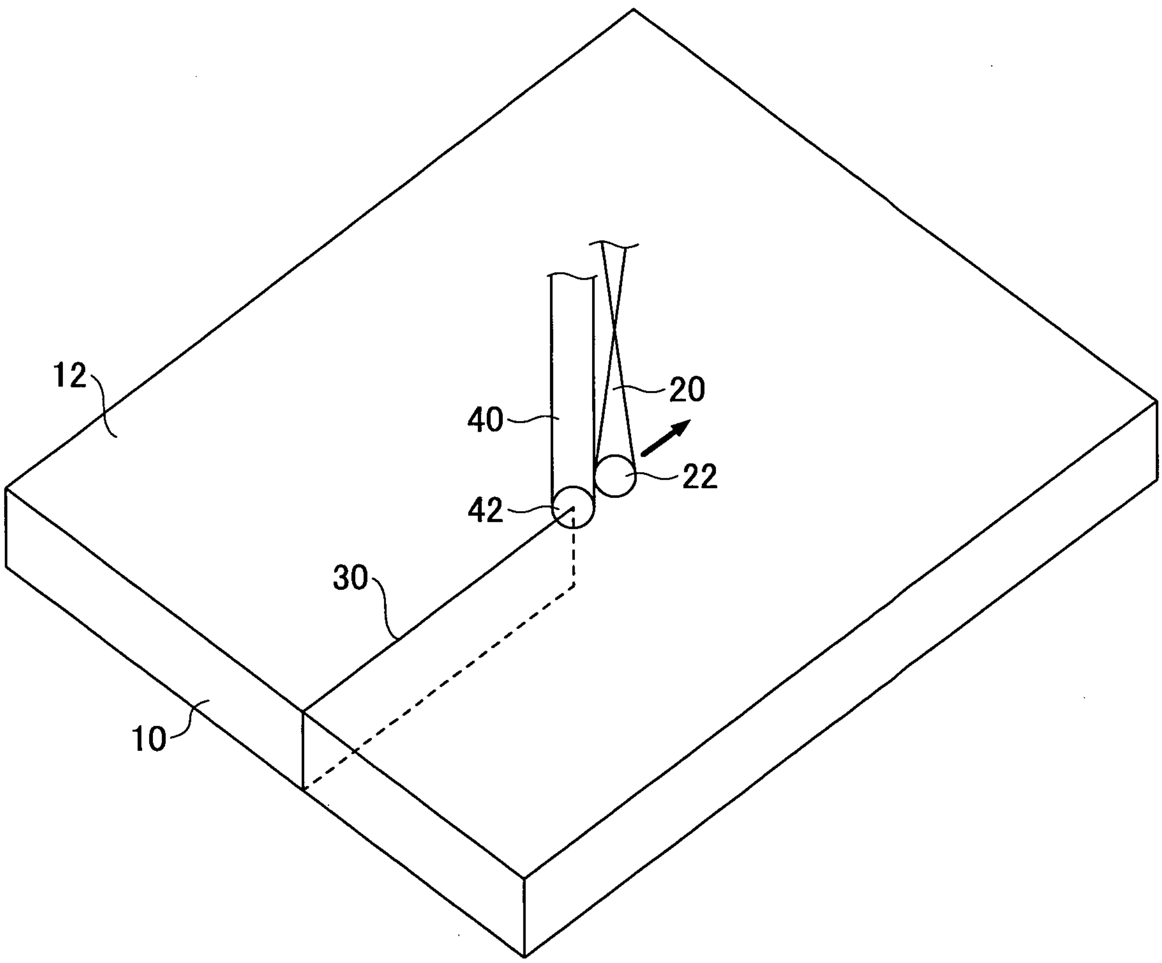

FIG.10A

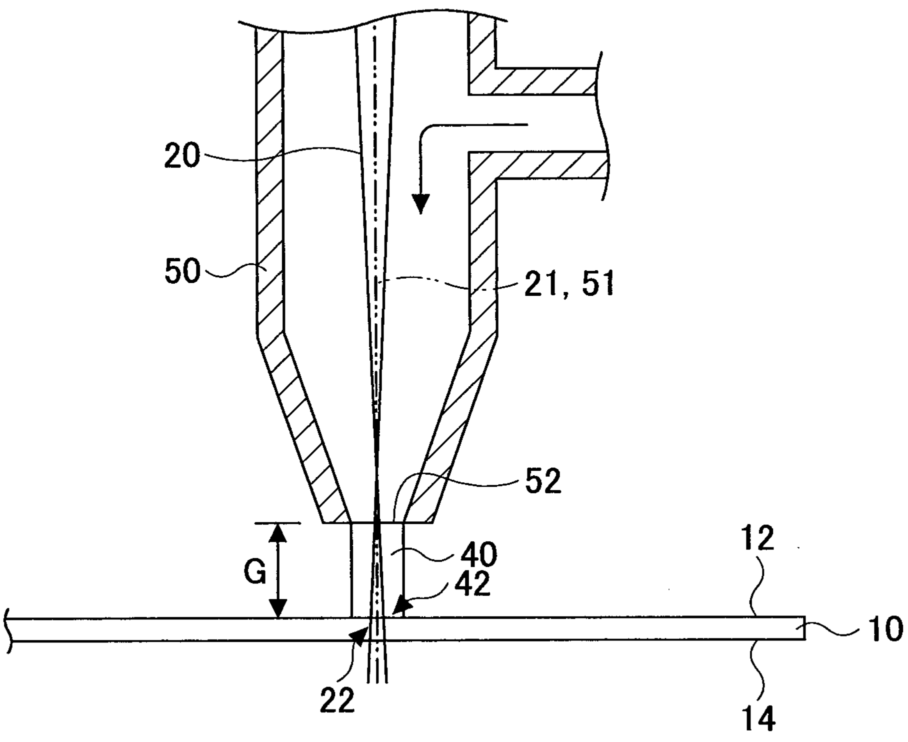

FIG.10B

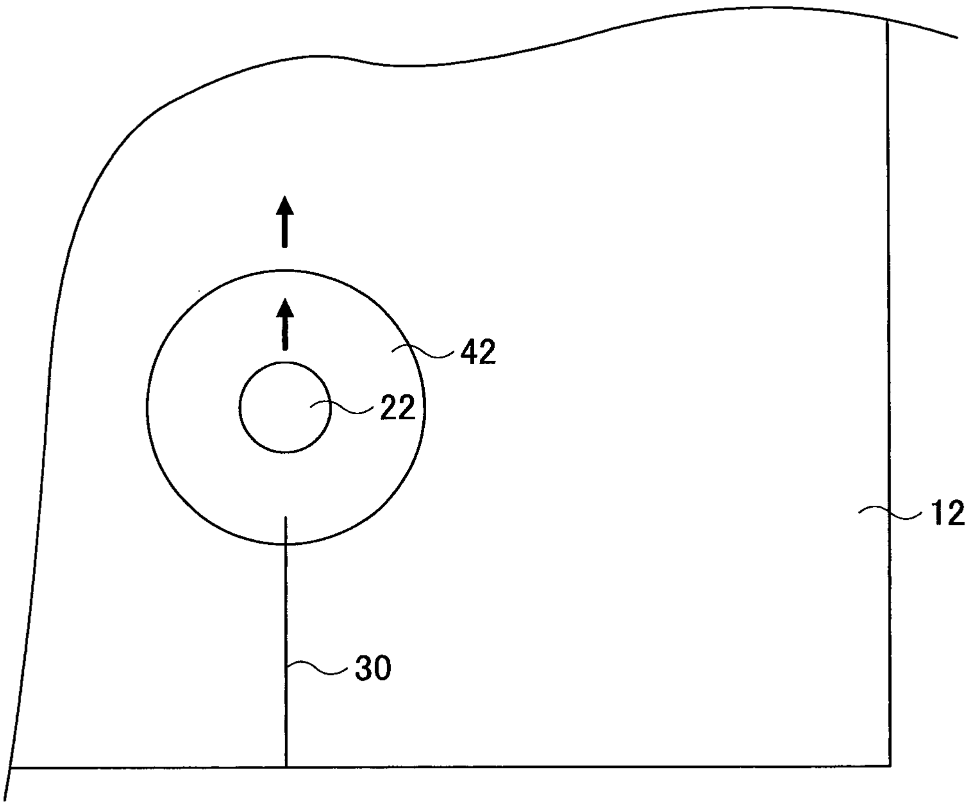

FIG.11A

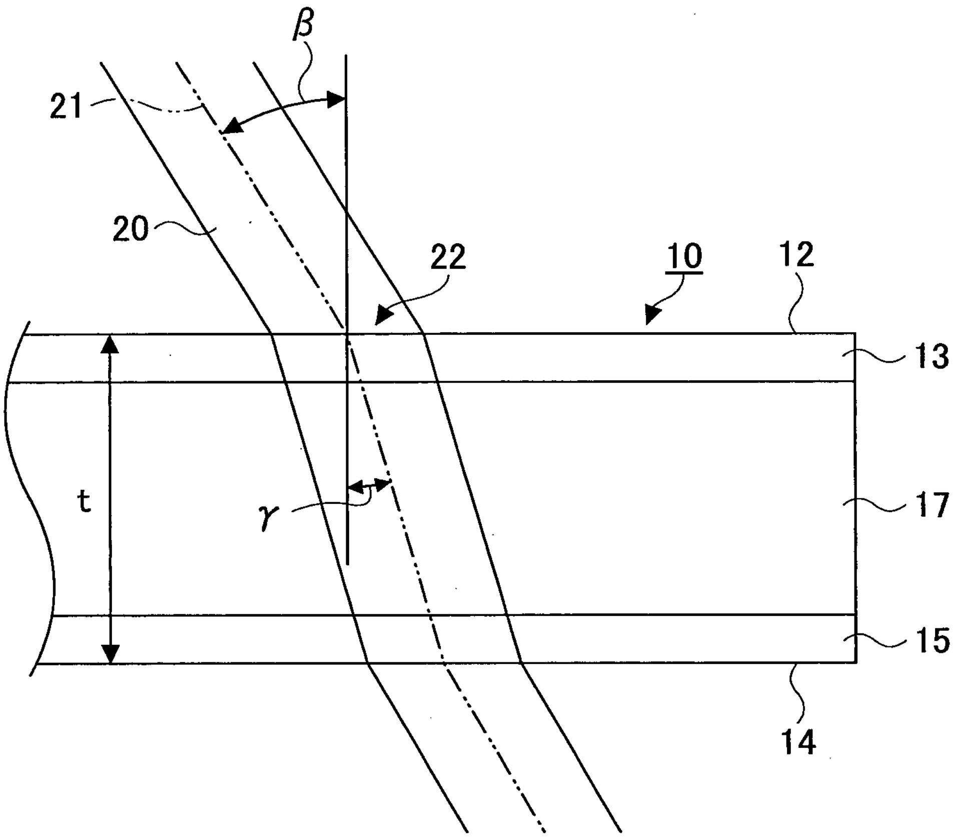

FIG.11B

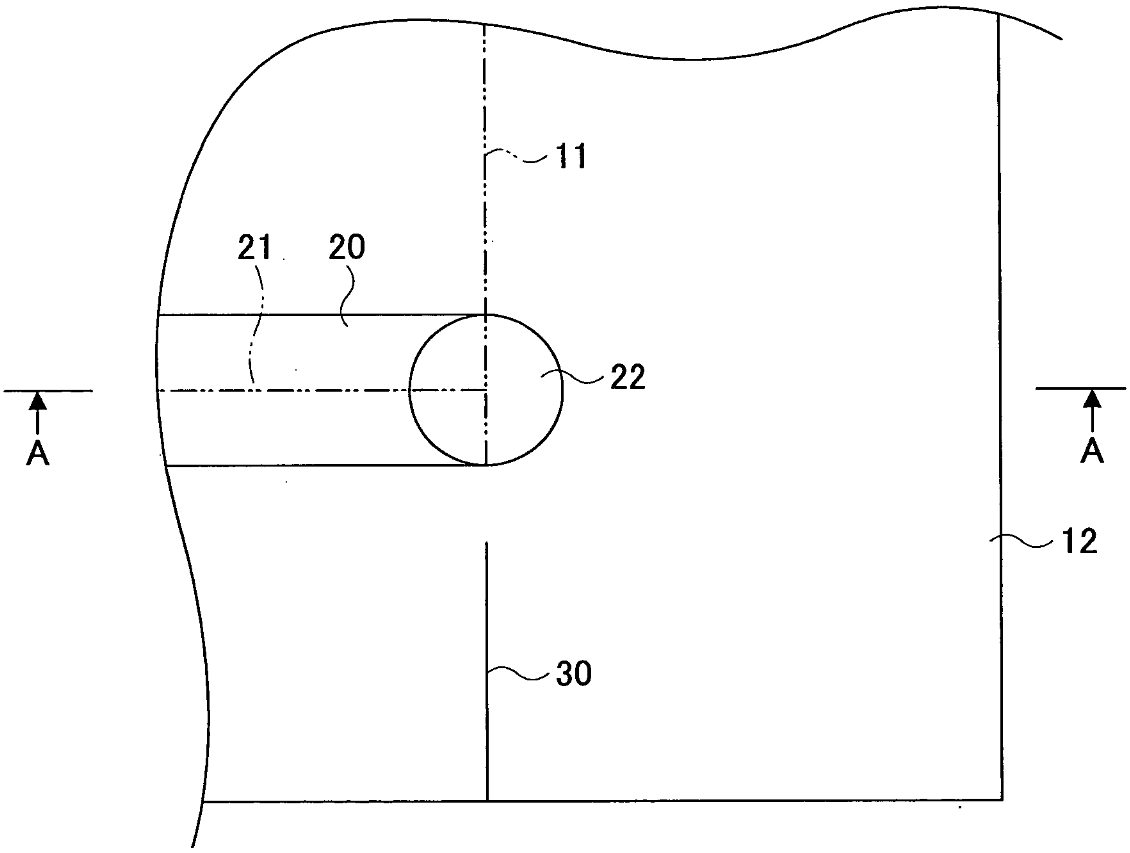

FIG.12

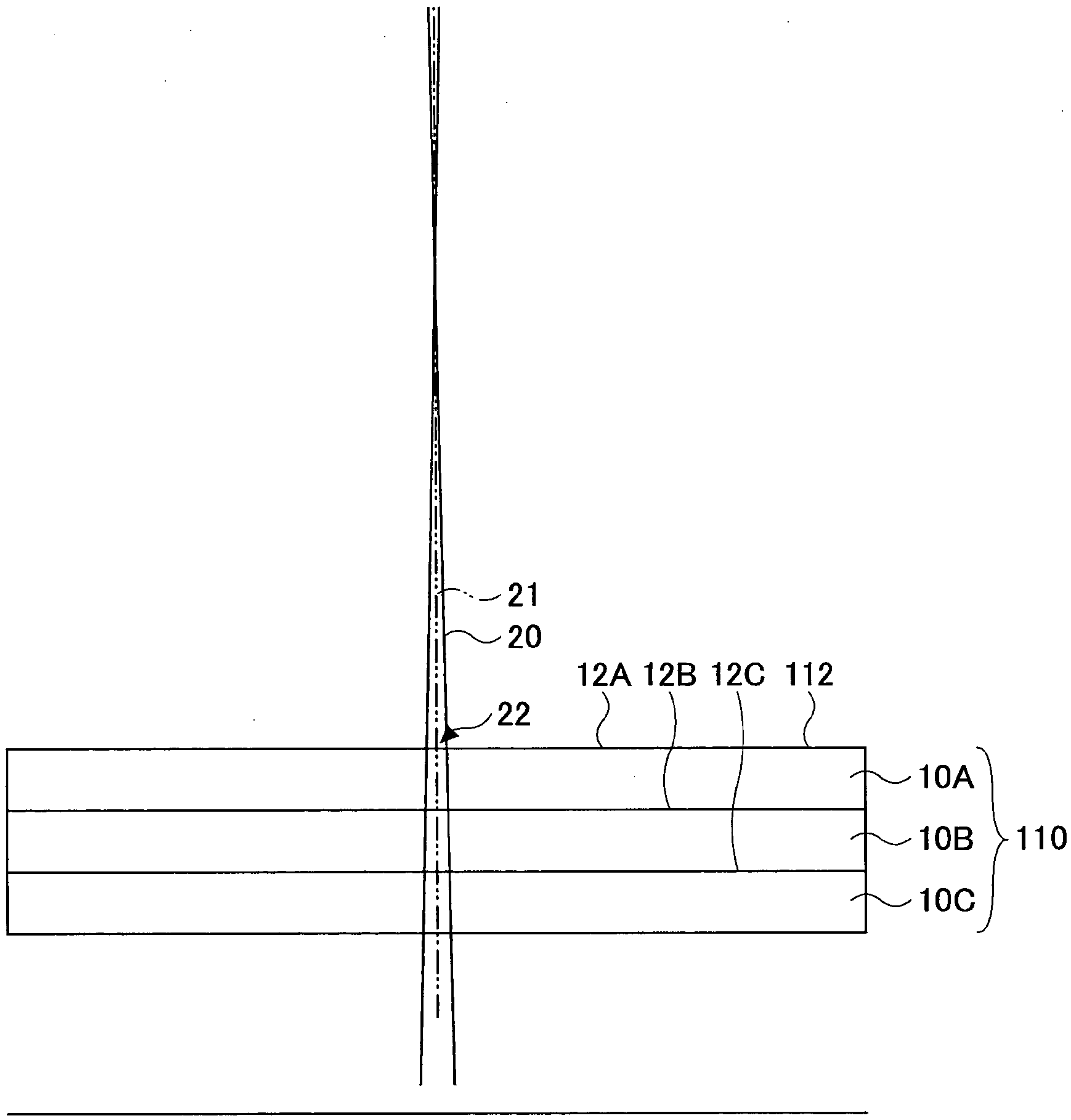

FIG.13

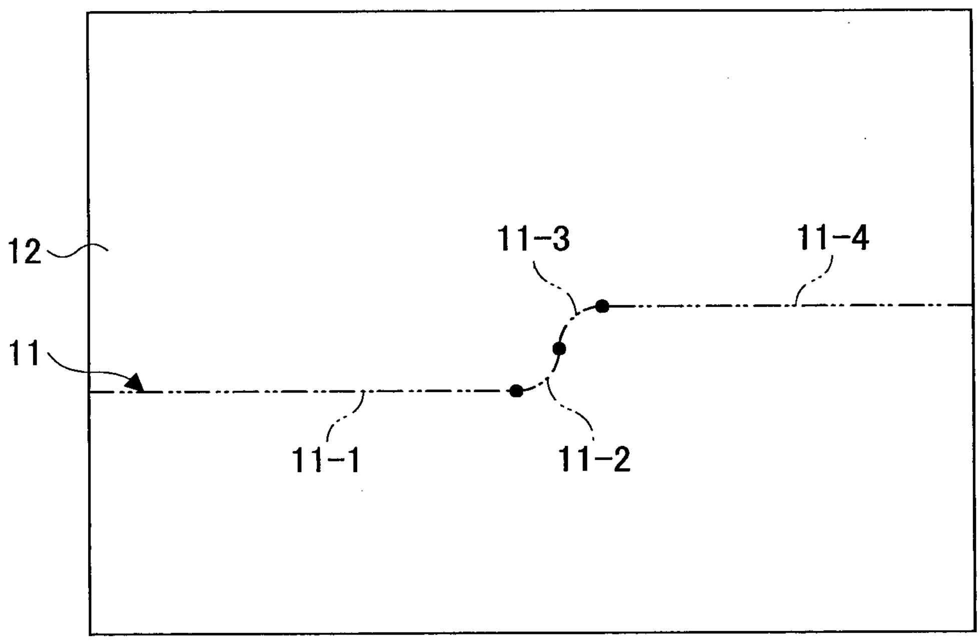

**INTERNATIONAL SEARCH REPORT**

International application No.
PCT/JP2012/050334

A. CLASSIFICATION OF SUBJECT MATTER
*C03B33/09*(2006.01)i, *B23K26/00*(2006.01)i, *B23K26/14*(2006.01)i, *B23K26/38*(2006.01)i

According to International Patent Classification (IPC) or to both national classification and IPC

B. FIELDS SEARCHED

Minimum documentation searched (classification system followed by classification symbols)
C03B23/00-35/26, C03B40/00-40/04, B23K26/00, B23K26/14, B23K26/38

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2006-256944 A (Lemi Co., Ltd.), 28 September 2006 (28.09.2006), claims; paragraphs [0008] to [0017], [0044]; examples (Family: none) | 1-14 |
| A | JP 2007-301624 A (Shibaura Mechatronics Co., Ltd.), 22 November 2007 (22.11.2007), entire text (Family: none) | 1-14 |

☒ Further documents are listed in the continuation of Box C.　☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04 April, 2012 (04.04.12) | 17 April, 2012 (17.04.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2012/050334

C (Continuation). DOCUMENTS CONSIDERED TO BE RELEVANT

| Category* | Citation of document, with indication, where appropriate, of the relevant passages | Relevant to claim No. |
|---|---|---|
| A | WO 2003/076151 A1 (Mitsuboshi Diamond Industrial Co., Ltd.), 18 September 2003 (18.09.2003), entire text & US 2005/0150254 A1 & EP 1498243 A1 & AU 2003213332 A & CN 1642704 A | 1-14 |
| A | JP 2010-089143 A (Mitsuboshi Diamond Industrial Co., Ltd.), 22 April 2010 (22.04.2010), entire text (Family: none) | 1-14 |
| A | JP 2003-001449 A (Hamamatsu Photonics Kabushiki Kaisha), 08 January 2003 (08.01.2003), entire text & US 2004/0002199 A1 & EP 1338371 A1 & WO 2002/022301 A1 & FR 2877400 A & AU 8622701 A & IL 154910 D & TW 250060 B & KR 10-2005-0073628 A & CN 1473087 A & SG 146432 A | 1-14 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008247732 A
- JP 2011003496 A
- JP 2011190024 A